(19) Europäisches Patentamt European Patent Office Office européen des brevets

(11) **EP 4 676 056 A1**

(12) **EUROPEAN PATENT APPLICATION**

(43) Date of publication:
**07.01.2026 Bulletin 2026/02**

(21) Application number: **24306072.0**

(22) Date of filing: **02.07.2024**

(51) International Patent Classification (IPC):
***H04N 19/52*** *(2014.01)*

(52) Cooperative Patent Classification (CPC):
**H04N 19/52**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **InterDigital CE Patent Holdings, SAS 75017 Paris (FR)**

(72) Inventors:
• **RADOSAVLJEVIC, Milos**
 **35000 RENNES (FR)**
• **NASER, Karam**
 **35250 MOUAZE (FR)**
• **CHEN, Ya**
 **35700 RENNES (FR)**
• **LE LEANNEC, Fabrice**
 **35830 BETTON (FR)**

(74) Representative: **Vossius & Partner Patentanwälte Rechtsanwälte mbB Siebertstraße 3 81675 München (DE)**

(54) **A METHOD FOR HISTORY-BASED LIST ENRICHMENT AND A SYSTEM THEREOF**

(57) Systems and methods for video encoding and/or video decoding are provided. An encoder and/or a decoder may perform a method including determining a plurality of candidates for encoding and/or decoding a video block based on an encoding mode and/or a decoding mode. The method may sort the plurality of candidates. The method may obtain an index of a selected candidate. The method may check, based on the index, if the selected candidate is a best-by-criterion candidate. If the selected candidate is not the best-by-criterion candidate, the method may identify a history-based list corresponding to the encoding and/or decoding modes. The method may store the best-by-criterion candidate in the history-based list. The method may also store a combination of the selected candidate and the best-by-criterion candidate in the history-based list. The history-based list may be maintained by the encoder and by the decoder.

FIG. 12

**EP 4 676 056 A1**

**Description**

**TECHNICAL FIELD**

The present embodiments generally relate to systems and methods for video encoding and decoding, and specifically to one or more history-based lists used in video encoding and decoding.

**BACKGROUND**

Video encoding and/or decoding processes may use different coding modes for coding different video blocks. A coding mode used by an encoder may be signaled to a decoder. Conventional encoding and/or decoding methods use certain previously identified blocks and/or vectors for coding next video blocks. However, conventional lists used by the conventional coding methods to store the previously identified blocks and/or vectors are very restrictive. In that, conventional techniques of creating the lists fail to consider various blocks and/or vectors that may be useful for coding the next video blocks, thereby causing lower encoding efficiency and inefficient utilization of resources. Therefore, there is a need for an effective encoding and/or decoding method that provides enhanced efficiency and improves resource utilization.

**SUMMARY**

In some implementations, the present disclosure is directed to implementations of systems and methods for video encoding and/or decoding.

In an implementation, one or more methods for encoding and/or decoding a video block are provided. The methods may be implemented by an encoder and/or a decoder. The methods include determining a plurality of candidates corresponding to an encoding mode and/or a decoding mode. The plurality of candidates are sorted based on at least one criterion associated with the encoding mode and/or the decoding mode. A candidate is selected from the plurality of candidates for encoding and/or decoding the video block. A best-by-criterion candidate is selected from the plurality of candidates. At least one history-based list is selected from a plurality of history-based lists corresponding to the encoding mode and/or the decoding mode. The selected candidate is stored in the at least one history-based list. The best-by-criterion candidate is also stored in the at least one history-based list if the best-by-criterion candidate is different from the selected candidate.

In an implementation, a combination of the best-by-criterion candidate and the selected candidate is determined when the best-by-criterion candidate is different from the selected candidate. The combination of the best-by-criterion candidate and the selected candidate is stored in the at least one history-based list.

In an implementation, a cost for each candidate of the plurality of candidates is determined.

In an implementation, the plurality of candidates are sorted in an ascending order of corresponding costs. An index is assigned to the each candidate of the plurality of candidates based on the corresponding cost.

In an implementation, the best-by-criterion candidate is the candidate from the plurality of candidates corresponding to a least cost.

In an implementation, a signal indicative of one or more of: the encoding mode and/or the decoding mode and/or the index associated with the selected candidate is transmitted by an encoder to a decoder.

In an implementation, each history-based list of the plurality of history-based lists corresponds to at least one distinct prediction mode.

In an implementation, the at least one distinct prediction mode comprises an intra template matching prediction mode, an intra block copy mode, an inter prediction mode, a cross-component prediction (CCP) mode, or an extrapolation filter-based intra prediction (EIP) mode.

In an implementation, the plurality of candidates comprise one or more of: a plurality of block vectors, a plurality of motion vectors, a plurality of CCP models, or a plurality of EIP mode parameters.

In an implementation, a decoder for decoding a video block is provided. The decoder comprises a memory configured to store a plurality of history-based lists. The decoder further comprises one or more processors coupled to the memory. The one or more processors are configured to receive a signal from an encoder. The signal is indicative of an index of a candidate selected from a plurality of candidates based on at least one criterion. The decoder stores a best-by-criterion candidate in at least one history-based list of the plurality of history-based lists if the selected candidate is different from the best-by-criterion candidate. The decoder decodes the video block using the selected candidate.

In an implementation, a video codec device is provided. The video codec device comprises one or more processors configured to perform any of the encoding and/or decoding methods described above.

In an implementation, a circuit configured to perform any of the encoding and/or decoding methods described above is provided.

In an implementation, a non-transitory computer-readable medium is provided. The non-transitory computer-readable medium comprises instructions that, when executed by one or more processors of a computing device, cause the one or more processors to perform any of the methods of encoding and/or decoding video data as described above.

## BRIEF DESCRIPTION OF THE DRAWINGS

A more detailed understanding may be had from the following description, given by way of example in conjunction with the accompanying drawings, wherein like reference numerals in the figures indicate like elements, and wherein:

FIG. 1 illustrates a block diagram of an embodiment of a video encoder in which various aspects of the embodiments may be implemented;

FIG. 2 illustrates a block diagram of an embodiment of a video decoder in which various aspects of the embodiments may be implemented;

FIG. 3 illustrates a block diagram of a system within which various aspects of present embodiments may be implemented;

FIG. 4 illustrates an example intra template matching search area in which various aspects of the embodiments may be implemented;

FIG. 5 illustrates an example sparse search and an example refinement search in an intra template matching prediction (ITMP) process in which various aspects of the embodiments may be implemented;

FIG. 6 illustrates an example ITMP process in which various aspects of the embodiments may be implemented;

FIG. 7 illustrates an example derivation of an auto relocated block vector prediction (AR-BVP) in which various aspects of the embodiments may be implemented;

FIG. 8 illustrates one or more example positions associated with a block in AR-BVP in which various aspects of the embodiments may be implemented;

FIG. 9 illustrates one or more example padding candidates for replacement of one or more zero vector candidates in which various aspects of the embodiments may be implemented;

FIG. 10 illustrates an example process of storing a selected candidate and/or a best-by-criterion candidate in a history-based list in which various aspects of the embodiments may be implemented;

FIGS. 11A and 11B illustrate an example process for updating a history-based list based on an index of the selected candidate in which various aspects of the embodiments may be implemented; and

FIG. 12 illustrates a flowchart of an example encoding and/or decoding method in which various aspects of the embodiments may be implemented.

## DETAILED DESCRIPTION

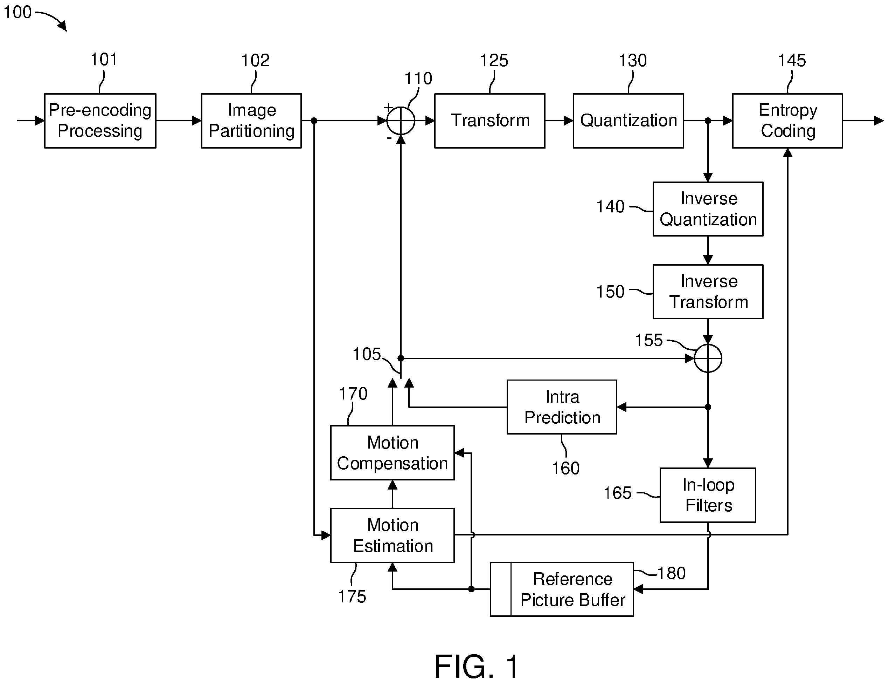

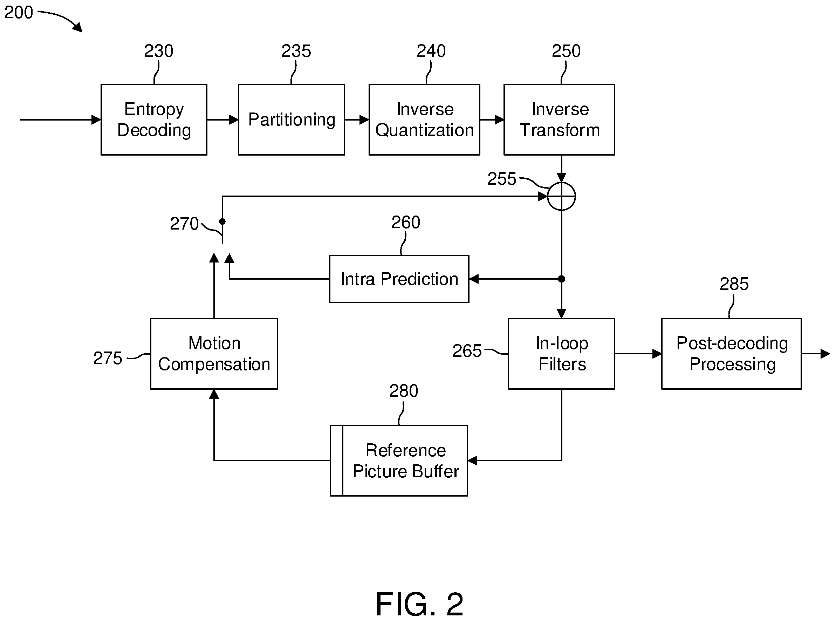

Various methods and other aspects described in this application can be used to modify modules, for example, the motion compensation (170, 275), motion estimation (175), entropy coding (145), intra (160, 260) and/or decoding modules (230), of a video encoder 100 and decoder 200 as shown in FIG. 1 and FIG. 2 . Moreover, the present aspects are not limited to versatile video coding (VVC) or high efficiency video coding (HEVC), and can be applied, for example, to other standards and recommendations, whether pre-existing or future-developed, and extensions of any such standards and recommendations (including VVC and HEVC). Unless indicated otherwise, or technically precluded, the aspects described in this application can be used individually or in combination.

Various numeric values are used in the present application, for example. The specific values are for example purposes and the aspects described are not limited to these specific values.

FIG. 1 illustrates an encoder 100. Variations of this encoder 100 are contemplated, but the encoder 100 is described below for purposes of clarity without describing all expected variations.

Before being encoded, the video sequence may go through pre-encoding processing (101), for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of one of the color components). Metadata can be associated with the pre-processing, and attached to the bitstream.

In the encoder 100, a picture is encoded by the encoder elements as described below. The picture to be encoded is partitioned (102) and processed in units of, for example, coding units (CUs). Each unit is encoded using, for example, either an intra or inter mode. When a unit is encoded in an intra mode, it performs intra prediction (160). In an inter mode, motion estimation (175) and compensation (170) are performed. The encoder decides (105) which one of the intra mode or inter mode to use for encoding the unit, and indicates the intra/inter decision by, for example, a prediction mode flag. Prediction residuals are calculated, for example, by subtracting (110) the predicted block from the original image block.

The prediction residuals are then transformed (125) and quantized (130). The quantized transform coefficients, as well as motion vectors and other syntax elements, are entropy coded (145) to output a bitstream. The encoder can skip the transform and apply quantization directly to the non-transformed residual signal. The encoder can bypass both transform and quantization, i.e., the residual is coded directly without the application of the transform or quantization processes.

The encoder 100 decodes an encoded block to provide a reference for further predictions. The quantized transform coefficients are de-quantized (140) and inverse transformed (150) to decode prediction residuals. Combining (155) the decoded prediction residuals and the predicted block, an image block is reconstructed. In-loop filters (165) are applied to the reconstructed picture to perform, for example, deblocking and/or sample adaptive offset (SAO) and/or adaptive loop filter (ALF) filtering to reduce encoding artifacts. The filtered image is stored at a reference picture buffer (180).

FIG. 2 illustrates a block diagram of a video decoder 200. In the decoder 200, a bitstream is decoded by the decoder elements as described below. Video decoder 200 generally performs a decoding pass reciprocal to the encoding pass as described in FIG. 1 . The encoder 100 also generally performs video decoding as part of encoding video data.

In particular, the input of the decoder includes a video bitstream, which can be generated by video encoder 100. The bitstream is first entropy decoded (230) to obtain transform coefficients, motion vectors, and other coded information. The picture partition information indicates how the picture is partitioned. The decoder may therefore divide (235) the picture according to the decoded picture partitioning information. The transform coefficients are de-quantized (240) and inverse transformed (250) to decode the prediction residuals. Combining (255) the decoded prediction residuals and the predicted block, an image block is reconstructed. The predicted block can be obtained (270) from intra prediction (260) or motion-compensated prediction (i.e., inter prediction) (275). In-loop filters (265) are applied to the reconstructed image. The filtered image is stored at a reference picture buffer (280). Note that, for a given picture, the contents of the reference picture buffer 280 on the decoder 200 side are identical to the contents of the reference picture buffer 180 on the encoder 100 side for the same picture.

The decoded picture can further go through post-decoding processing (285), for example, an inverse color transform (e.g. conversion from YCbCr 4:2:0 to RGB 4:4:4) or an inverse remapping performing the inverse of the remapping process performed in the pre-encoding processing (101). The post-decoding processing can use metadata derived in the pre-encoding processing and signaled in the bitstream.

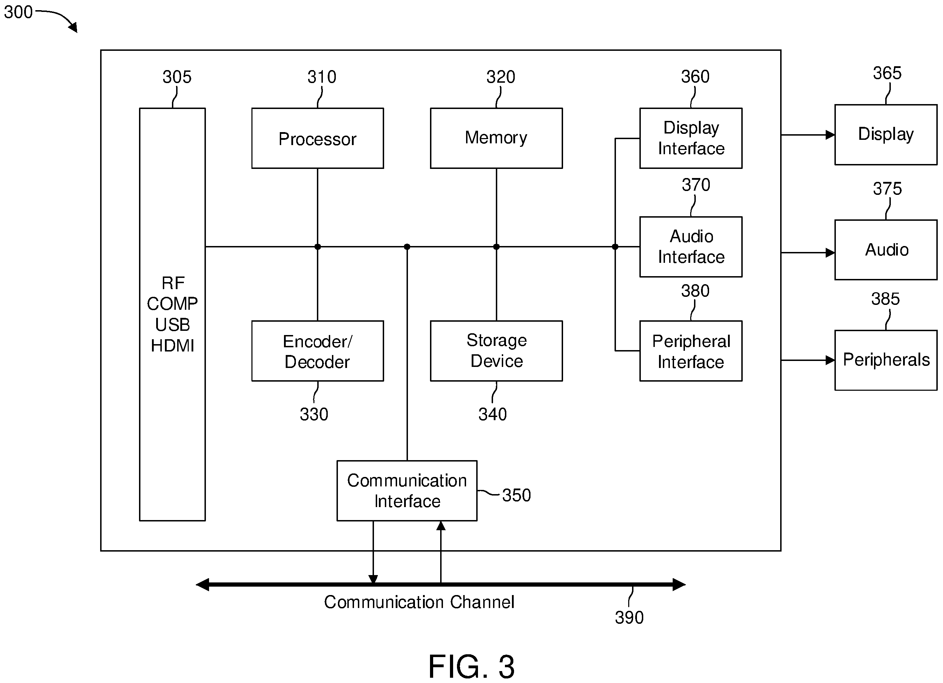

FIG. 3 illustrates a block diagram of an example of a system in which various aspects and embodiments can be implemented. The system 300 may be embodied as a device including the various components described below and is configured to perform one or more of the aspects described in this application. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of the system 300, singly or in combination, may be embodied in a single integrated circuit, multiple ICs, and/or discrete components. For example, in at least one embodiment, the processing and encoder/decoder elements of the system 300 are distributed across multiple ICs and/or discrete components. In various embodiments, the system 300 is communicatively coupled to other systems, or to other electronic devices, via, for example, a communications bus or through dedicated input and/or output ports. In various embodiments, the system 300 is configured to implement one or more of the aspects described in this application.

The system 300 includes at least one processor 310 configured to execute instructions loaded therein for implementing, for example, the various aspects described in this application. The processor 310 may include embedded memory, input output interface, and various other circuitries as known in the art. The system 300 includes at least one memory 320 (e.g., a volatile memory device, and/or a non-volatile memory device). The system 300 includes a storage device 340, which may include non-volatile memory and/or volatile memory, including, but not limited to, EEPROM, ROM, PROM, RAM, DRAM, SRAM, flash, magnetic disk drive, and/or optical disk drive. The storage device 340 may include an internal storage device, an attached storage device, and/or a network accessible storage device, as non-limiting examples.

The system 300 includes an encoder/decoder module 330 configured, for example, to process data to provide an encoded video/3D object or decoded video/3D object, and the encoder/decoder module 330 may include its own processor and memory. The encoder/decoder module 330 represents module(s) that may be included in a device to perform the encoding and/or decoding functions. As is known, a device may include one or both of the encoding and decoding modules. Additionally, the encoder/decoder module 330 may be implemented as a separate element of system 300 or may be incorporated within the processor 310 as a combination of hardware and software as known to those skilled in the art.

Program code to be loaded onto the processor 310 or the encoder/decoder 330 to perform the various aspects described in this application may be stored in the storage device 340 and subsequently loaded onto the memory 320 for execution by the processor 310. In accordance with various embodiments, one or more of the processor 310, the memory 320, the storage device 340, and the encoder/decoder module 330 may store one or more of various items during the performance of the processes described in this application. Such stored items may include, but are not limited to, the input video/3D object, the decoded video/3D object or portions of the decoded video/3D object, the bitstream, matrices, variables, and intermediate or final results from the processing of equations, formulas, operations, and operational logic.

In several embodiments, memory inside of the processor 310 and/or the encoder/decoder module 330 is used to store instructions and to provide working memory for processing that is needed during encoding or decoding. In other embodiments, however, a memory external to the processing device (for example, the processing device may be either the processor 310 or the encoder/decoder module 330) is used for one or more of these functions. The external memory may be the memory 320 and/or the storage device 340, for example, a dynamic volatile memory and/or a non-volatile flash memory. In several embodiments, an external non-volatile flash memory is used to store the operating system of a television. In at least one embodiment, a fast external dynamic volatile memory such as a RAM is used as working memory for coding and decoding operations, such as for instance MPEG-2, HEVC, or VVC.

The input to the elements of the system 300 may be provided through various input devices as indicated in block 305. Such input devices include, but are not limited to, (i) a radio frequency (RF) portion that receives an RF signal transmitted, for example, over the air by a broadcaster, (ii) a composite input terminal, (iii) a universal serial bus (USB) input terminal, and/or (iv) a high-definition multimedia interface (HDMI) input terminal.

In various embodiments, the input devices of the block 305 have associated respective input processing elements as known in the art. For example, the RF portion may be associated with elements suitable for (i) selecting a desired frequency (also referred to as selecting a signal, or band-limiting a signal to a band of frequencies), (ii) down converting the selected signal, (iii) band-limiting again to a narrower band of frequencies to select (for example) a signal frequency band which may be referred to as a channel in certain embodiments, (iv) demodulating the down converted and bandlimited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion may include a tuner that performs various of these functions, including, for example, down converting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, down converting, and filtering again to a desired frequency band. Various embodiments rearrange the order of the above-described (and other) elements, remove some of these elements, and/or add other elements performing similar or different functions. Adding elements may include inserting elements in between existing elements, for example, inserting amplifiers and an analog-to-digital converter. In various embodiments, the RF portion includes an antenna.

Additionally, the USB and/or HDMI terminals may include respective interface processors for connecting the system 300 to other electronic devices across the USB and/or HDMI connections. It is to be understood that various aspects of input processing, for example, Reed-Solomon (RS) error correction, may be implemented, for example, within a separate input processing IC or within the processor 310 as necessary. Similarly, aspects of the USB or HDMI interface processing may be implemented within separate interface ICs or within the processor 310 as necessary. The demodulated, error corrected, and demultiplexed stream is provided to various processing elements, including, for example, the processor 310, and the encoder/decoder 330 operating in combination with the memory and storage elements to process the data stream as necessary for presentation on an output device.

Various elements of the system 300 may be provided within an integrated housing, Within the integrated housing, the various elements may be interconnected and transmit data therebetween using suitable connection arrangement 315, for example, an internal bus as known in the art, including the I2C bus, wiring, and printed circuit boards.

The system 300 includes a communication interface 350 that enables communication with other devices via a communication channel 390. The communication interface 350 may include, but is not limited to, a transceiver configured to transmit and to receive data over the communication channel 390. The communication interface 350 may include, but is not limited to, a modem or network card and the communication channel 390 may be implemented, for example, within a wired and/or a wireless medium.

Data is streamed to the system 300, in various embodiments, using a wireless fidelity (Wi-Fi) network such as IEEE 802.11. A Wi-Fi signal of these embodiments is received over the communications channel 390 and the communications interface 350 which are adapted for Wi-Fi communications. The communications channel 390 of these embodiments is typically connected to an access point or router that provides access to outside networks including the Internet for allowing streaming applications and other over-the-top communications. Other embodiments provide streamed data to the system 300 using a set-top box that delivers the data over the HDMI connection of the input block 305. Still other embodiments provide streamed data to the system 300 using the RF connection of the input block 305.

The system 300 may provide an output signal to various output devices, including a display 365, speakers 375, and other peripheral devices 385. The other peripheral devices 385 include, in various examples of embodiments, one or more of a stand-alone digital video recorder (DVR), a disk player, a stereo system, a lighting system, and other devices that provide a function based on the output of the system 300. In various embodiments, control signals are communicated between the system 300 and the display 365, speakers 375, or other peripheral devices 385 using signaling such as AV.Link, CEC, or other communications protocols that enable device- to-device control with or without user intervention. The output devices may be communicatively coupled to the system 300 via dedicated connections through respective interfaces 360, 370, and 380. Alternatively, the output devices may be connected to the system 300 using the communications channel 390 via the communications interface 350. The display 365 and the speakers 375 may be integrated in a single unit with the other components of the system 300 in an electronic device, for example, a television. In various embodiments, the display interface 360 includes a display driver, for example, a timing controller (T Con) chip.

The display 365 and the speaker 375 may alternatively be separate from one or more of the other components, for example, if the RF portion of input 305 is part of a separate set-top box. In various embodiments in which the display 365 and the speakers 375 are external components, the output signal may be provided via dedicated output connections, including, for example, HDMI ports, USB ports, or COMP outputs.

As mentioned above, in many implementations of two-dimensional or three-dimensional environments, environmental details and/or objects or entities may be represented by point clouds or meshes of vertices and/or edges forming a large number of triangles or other shapes. For example, for three-dimensional virtual reality, augmented reality, or extended reality (VR, AR, or XR) environments, virtual objects within the environment may be represented as a mesh of triangles to represent the geometry of the object. In order to provide fine detail, the triangles or other shapes utilized in the mesh may be very small, with the mesh having a correspondingly large number of vertices and edges, potentially in the millions or billions of vertices for a complex object. This may require a correspondingly large amount of memory for storage and bandwidth for transmission. When used for three-dimensional video or animation, the problem is even worse: even a relatively simple environment with 1 million vertices, at 30 frames per second, may require a total bandwidth of 3.6 gigabits per second if uncompressed.

Different encoding and decoding standards and implementations have been proposed, including video-based point cloud compression (V-PCC), geometry-based point cloud compression (GPCC), and video-based dynamic mesh coding (V-DMC), promulgated by the motion picture experts group (MPEG); P11 dynamic mesh coding, developed by Apple Inc.; and others. A mesh may comprise one or more of the following features: a list of vertex positions; a topology defining the connection between the vertices, for instance a list of faces; and optionally photometric data, such as a texture map or color values associated with vertices or faces. The 3D mesh can be derived from a point cloud of the 3D object. The faces defined by connected vertices can be triangles or any other possible polygons or combinations of polygons. In many implementations, photometric data may be projected on texture map so that the texture map can be encoded as a video image.

In the present application, the terms "reconstructed" and "decoded" may be used interchangeably, the terms "encoded" or "coded" may be used interchangeably, the terms "pixel" or "sample" may be used interchangeably, and the terms "image," "picture" and "frame" may be used interchangeably. Usually, but not necessarily, the term "reconstructed" is used at the encoder side while "decoded" is used at the decoder side.

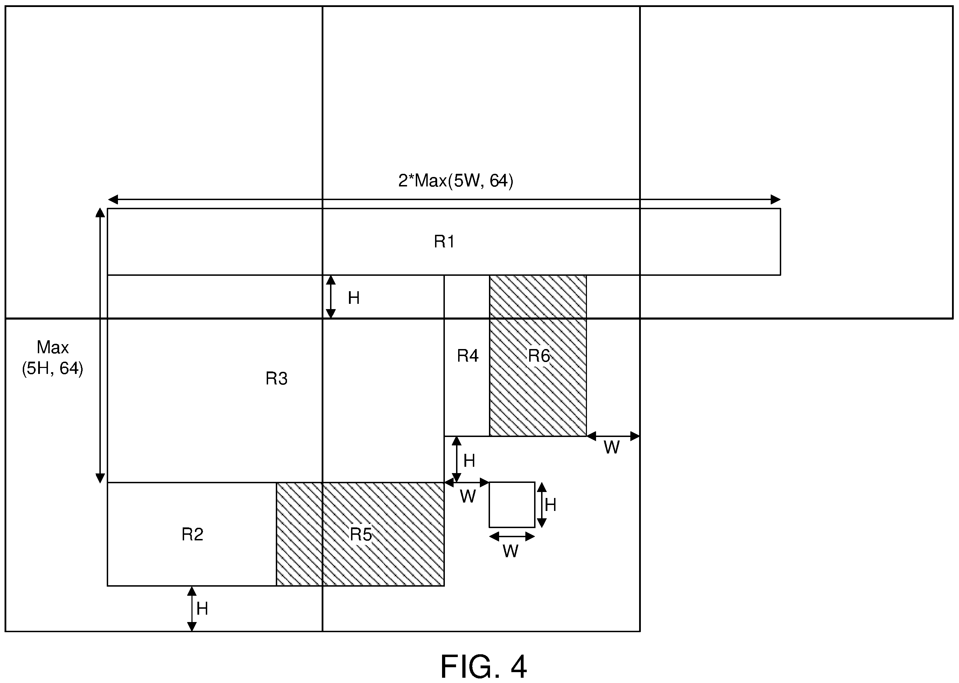

FIG. 4 illustrates an example intra template matching search area in which various aspects of the embodiments may be implemented. An intra template matching prediction (ITMP) mode is an intra prediction mode that copies a best prediction block from a reconstructed part of a current frame, whose L-shaped template matches a current template. For a predefined search range, an encoder may search for a most similar template to the current template in the reconstructed part of the current frame and may use a corresponding block as a prediction block. The encoder may signal a usage of the ITMP mode. A same and/or similar corresponding prediction operation may be performed by a decoder.

The prediction signal may be generated by matching an L-shaped, a top-only and/or a left-only causal neighbor of a current block with another block in a predefined search area as shown in FIG. 4. There may be one or more predefined search areas (e.g. six search areas, viz. search areas R1 through R6 as shown in FIG. 4) which may include one or more reconstructed samples from top and/or left coding tree units (CTUs) and/or a part of the one or more reconstructed samples within a current CTU that may be located above, left, bottom-left and/or top-right to the current block.

A sum of absolute differences (SAD) may be used as a cost function for the ITMP mode. Given a search order of one or more regions (e.g. regions R4, R5, R6, R1, R2, and R3 shown in FIG. 4) is utilized, the decoder may generate and/or construct a candidate list of one or more template matching block vectors (e.g. the candidate list of up to 19 template matching block vectors) that may be ranked in an ascending order according to a template cost and/or the SAD.

In an example, a single predictor mode may be used. In the single predictor mode, a single predictor may be selected from the candidate list.

In an example, a fusion of multiple predictors may be used. In that, the multiple predictors may be blended to derive a final prediction block. One or more blending weights for one or more predictors may be computed from corresponding template matching cost of each predictor, and/or with a Wiener-filter based weight derivation method, for example.

In an example, a sub-pel precision mode may be used. In that, when a single predictor is used, sub-pel precision may be used such as but are not limited to 1/2-pel precision, 1/4-pel precision and/or 3/4-pel precision etc., for example, and each with one or more possible directions (e.g. 8 directions), for example.

In an example, a linear filter model mode may be used. The linear filter model may be learned between a reference template and the current template and may be applied to a reference block. The linear filter model mode may be used for the single predictor when sub-pel precision is not used.

In an example, an ITMP extension to a local illumination compensation (LIC) mode (e.g. ITMP-LIC), a decoder side intra mode derivation (DIMD) mode (e.g. ITMP-DIMD) and/or a spatial geometric partitioning (SGPM) mode (e.g. ITMP-SGPM) etc. may be used, as per JVET-AG0137. Also, an ITMP extension to a template based intra prediction (TIMD) mode may be used, for example.

One or more dimensions of the regions (e.g. SearchRange_w, SearchRange_h) may be set proportional to one or more block dimensions (e.g. BlkW, BlkH) to have a fixed number of SAD comparisons per pixel. For example:

$$\text{SearchRange\_w} = \min(64, a * \text{BlkW}) \qquad (1)$$

$$\text{SearchRange\_h} = \min(64, a * \text{BlkH}) \qquad (2)$$

Where 'a' is a constant that controls a gain/complexity trade-off. In an example, 'a' may be equal to 5.

In an example, to speed-up a template matching process, a search range of one or more search regions may be subsampled by a factor (e.g. by a factor of 3), which may be referred to as a sparse search. In one example, every third position in a horizontal direction and/or a vertical direction may be considered in a first step. After the first step is performed, i.e. all positions within the sparse search are checked and corresponding template costs are calculated, a refinement process may be performed. The refinement process may be performed via a second template matching search around a best match candidate (and/or several best candidates from the sparse search) with a reduced range.

The ITMP may be signaled at a CU level through a dedicated flag when the DIMD is not used for a current CU. That is, if the ITMP is used, then a rest of intra prediction modes may be inferred to be unused, for example.

Multi-candidate ITMP may be used in an example. In a multi-candidate ITMP method, the candidate list may be constructed. The candidate list may comprise multiple candidate block vectors (BVs) ranked in an ascending order of corresponding template matching costs. An index of a selected candidate BV may be signaled in a bitstream.

One or more additional ITMP modes may also be used, for example, a left template mode and/or an above template mode and/or an L-shape mode. The left and/or above template modes use a left side and/or an above side of a current prediction unit (PU) to derive one or more template matching candidates. Different templates may be used in the matching process as per JVET-AC0198 and/or JVET-AD0194.

A multi-candidate ITMP method may be included in an enhanced compression model (ECM), as per JVET-AC0068. In that, the candidate list may be constructed with a plurality of candidate BVs ranked in the ascending order of corresponding template matching costs, and the index of the selected candidate is signaled in the bit-stream.

Originally, the ITMP mode was designed to select only one BV corresponding to a smallest (i.e. least) template matching cost without additional signaling. The same process was performed on the encoder and decoder sides, and hence, no additional signaling was required to indicate a final predictor. In a camera captured content, the decoder may not find a perfect match. There may usually be several blocks that may be similar to the current block and may have similar template matching costs. Eventually, a BV candidate with a smallest (i.e. least) template matching cost may not be a best predictor.

Hence, multiple candidates may be used for the ITMP. The candidate list may be constructed and/or generated. The candidate BVs may be ranked in the ascending order of the corresponding template matching costs. The index may be signaled in the bitstream to indicate which candidate BV is selected and/or used for the current block. The template matching may be used to select a shortlist of one or more candidates from a plurality of BVs in the candidate list. The encoder may refer to the current block and may decide the selected candidate (e.g. based on a rate distortion optimization).

An example simplified syntax may be described as shown in Table 1:

Table 1

| |
|---|
| ... |
| **intra_tmp_flag** |
| if(intra_tmp_flag) { |
| **intra_tmp_idx** |
| } |
| ... |

where the intra_tmp_flag equal to 1 means that current block uses the ITMP and the intra_tmp_idx further indicates which BV of the plurality of BVs in the candidate list is used to identify the prediction block.

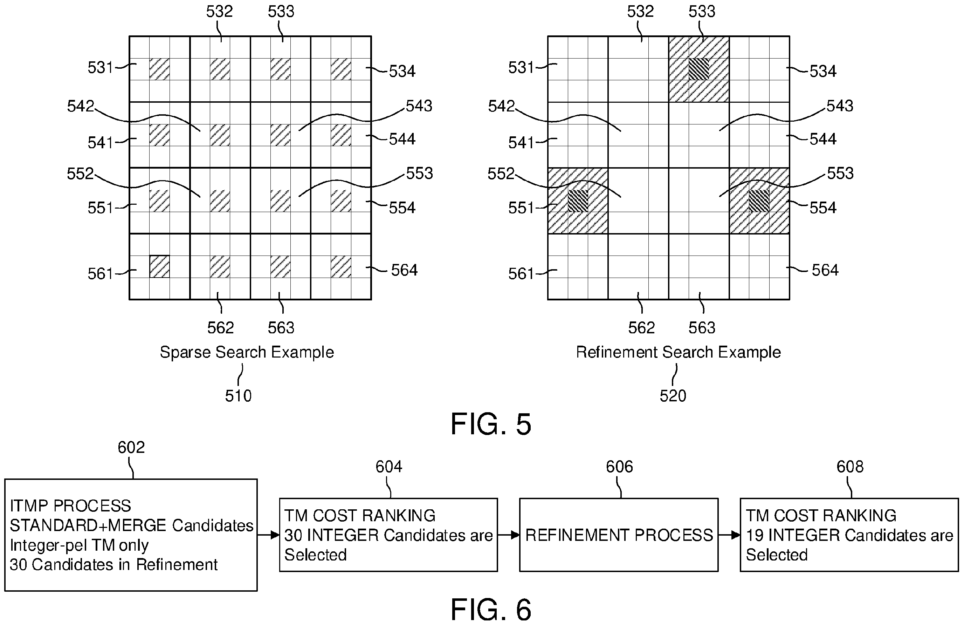

FIG. 5 illustrates an example sparse search 510 and an example refinement search 520 in which various aspects of the embodiments may be implemented. The sparse search 510 and the refinement search 520 may be utilized to generate and/or construct the candidate list. In the sparse search 510, the sub-sampling factor (e.g. 3) may be used. For example, every third position in the horizontal direction and/or the vertical direction may be tested in the first step (i.e. the sparse search 510). For instance, from the sparse search 510, the method may select every third position from a plurality of positions 531-534, 541-544, 551-554, and 561-564. In an example, top 30 BVs may be maintained based on the corresponding template matching costs in an initial candidate list. In the refinement search 520, each 3x3 block around each of the 30 BVs may be tested. Top 19 BVs after refinement may be selected to form a final candidate list including 19 final candidates, for example. One out of 19 final candidates may be selected as the final predictor by the encoder and an index corresponding to the final predictor may be signaled to the decoder. It may be understood that other implementations may utilize different search strategies.

An example syntax of an ITMP encoding and/or decoding technique if a DIMD flag is false and if an ITMP sequence parameter set (sps) flag is true may be described as shown in Table 2:

Table 2

| ... |
| --- |
| **intra_tmp_flag** |
| if(intra_tmp_flag) { |
|     **intra_tmp_fusion_flag** |
|     if(intra_tmp_fusion_flag) { |
|         **intra_tmp_fusion_idx** |
|         **intra_tmp_lic_flag** |
|     } else { |
|         **intra_tmp_idx** |
|         **intra_tmp_filter_flag** |
|         if(!intra_tmp_filter_flag) { |
|             **intra_tmp_lic_flag** |
|         } |
|         if(!intra_tmp_filter_flag and !intra_tmp_lic_flag) { |
|             **intra_tmp_sub_pel_precision_idx** |
|             if(intra_tmp_sub_pel_precision_idx != 0) { |
|                 **intra_tmp_sub_pel_direction_idx** |
|             } |
|         } |
|     } |
| } |
| ... |

The intra_tmp_flag may indicate whether the intra prediction type for the current block is the ITMP or not.

The intra_tmp_fusion_flag may indicate whether the fusion is used or not for the current block.

The intra_tmp_fusion_idx may indicate a candidate set used for the ITMP fusion. A range of the intra_tmp_fusion_idx may be 0 through 2, and the intra_tmp_fusion_idx may be used to indicate one or more of the three candidate sets {BV0 to BV4}, {BV5 to BV9}, and/or {BV10 to BV14}.

The intra_tmp_lic_flag may indicate if the ITMP with the LIC is used.

The intra_tmp_idx may indicate the index of the BV in the candidate list used for the current block. A range of the intra_tmp_idx may be 0 through 18. The candidates from the L-shaped template, the top template and/or the left template may be included in the same candidate list.

The intra_tmp_sub_pel_precision_idx may indicate a precision index for the current block. A range of the intra_tmp_sub_pel_precision_idx may be 0 through 3, used to indicate the integer-pel precision, the 1/2-pel precision, the 1/4-pel precision and/or the 3/4-pel precision, respectively.

The intra_tmp_sub_pel_direction_idx may indicate a sub-pel direction index for the current block. A range of intra_tmp_sub_pel_phase_idx may be 0 through 7.

In an embodiment, more candidates may be added to the ITMP search process by utilizing one or more block vectors of surrounding blocks.

In the ITMP mode, the template matching search process within the predefined search regions may be performed to obtain the one or more candidate BVs (e.g. up to 19 BVs). However, the ITMP template matching search may not take into consideration block vector information of neighboring PUs. Therefore, the ITMP search process may be augmented with new and/or additional candidates, e.g. one or more BVs of the neighboring PUs that may be coded with an intra block copy (IBC) mode and/or the ITMP mode. The new and/or additional candidates may be referred to as ITMP merge candidates. This may improve the ITMP by further including probable candidates during the ITMP search process. Previously, readily available BVs from neighboring blocks are not explored in the ITMP mode despite being more correlated with the properties of the current block. This may be overcome by extending the ITMP candidate list with the new and/or additional candidate BVs (also referred to as the ITMP merge candidates).

The ITMP candidate list may the enriched with the new and/or additional BVs that were not previously checked by the ITMP search process. This may be because the BVs may include one or more IBC BVs whose search region is larger than the ITMP search region. This may also be because one or more candidates are not tested in the first pass of the template matching processing (i.e. the sparse search with the subsampled regions). It is understood that the new and/or additional BVs may be correlated with one or more current block statistics as the new and/or additional BVs may be previously selected for predicting one or more nearby blocks.

In an example, as per JVET-AG0151, if a neighboring PU is coded in bi-IBC mode, both BVs may be included in the ITMP merge list. Otherwise, a uni-IBC BV may be included in the ITMP merge list.

In an example, if the neighboring PU is coded in the ITMP mode and the intra_tmp_idx > 0, then, the selected BV and a best-by-cost ITMP candidate, both may be included in the ITMP merge list. If the intra_tmp_idx is equal to 0, the selected and the best-by-cost BVs are the same, and hence, one of the selected and the best-by-cost BVs may be included in the ITMP merge list.

In an example, for N out of M available merge candidates, if M>N then one or more merge candidates outside the ITMP search range may be prioritized. In an example, up to 50 ITMP merge candidates may be selected (e.g. M can be up to 50). In another example, up to 10 candidates may be used (i.e. N=10). In that case, 10 merge candidates may be tested and/or compared with other candidates.

FIG. 6 illustrates an example simplified process of a current ITMP process in which various aspects of the embodiments may be implemented. At 602, the process may search for a plurality of candidates, including one or more standard ITMP candidates and/or one or more ITMP merge candidates, for example. At 604, the process may sort the plurality of candidates. The process may select a first predetermined number of candidates from the sorted candidates (e.g. 30 candidates). At 606, the process may perform the refinement search based on the first predetermined number of candidates. At 608, the process may select a second predetermined number of candidates.

In an example, from ECM-13.0, more candidates may be added to the ITMP merge list. For example, one or more auto-reallocated ITMP merge candidates may be added as in JVET-AH0055. In an example, additional clustering of the ITMP merge candidates may be performed if corresponding refinement search windows overlap as in JVET-AH0151.

In an example, one or more methods may be used to efficiently add the new and/or additional merge candidates. The one or more methods may be used to reduce complexity and optimize the ITMP search process.

In an example, one or more bi-prediction IBC candidates may be included in the ITMP merge list. In an example, one or more best-by-cost ITMP candidates may be included in the ITMP merge list. In an example, N out of M available merge candidates may be included if M>N. In an example, one or more IBC candidates may be prioritized. In an example, one or more merge candidates outside the ITMP search range may be prioritized. In an example, a 3x3 refinement may be performed if a merge candidate is inside the ITMP search region. In an example, an optimized refinement may be performed if the merge candidate is outside ITMP search region.

In an embodiment, the ITMP merge list may be further enriched by adding even more candidates from one or more blocks coded in the IBC mode and/or the ITMP mode. For example, if the neighboring PU is coded in the bi-prediction IBC mode (e.g. as in JVET-AD0134), instead of just one BV, a second BV from the bi-prediction IBC mode may also be stored and/or added to the ITMP merge list. That is, instead of the one BV, two BVs associated with the PU coded in the bi-prediction IBC mode may be added to the ITMP merge list.

In more examples, if the neighboring PU is coded in the ITMP mode, the BV that is selected for the PU may be added to the ITMP merge list. The BV may be indicated by an ITMP index (e.g. the intra_tmp_idx). The BV may or may not be the one with the smallest (i.e. least) template cost. Hence, if the intra_tmp_idx is larger than 0, the BV with the smallest template cost may be included, that is the candidate with the intra_tmp_idx equal to 0 may be included. The included candidate may be the candidate which is first in the list of final candidates (e.g. first out of the list of 19 candidates).

In an example, a combination of multiple candidates may be included in the ITMP merge list. In that, the bi-prediction IBC candidate and the ITMP best candidate by template cost (e.g. the best-by-cost candidate) may both be added in the ITMP merge list in addition to one or more candidates described above.

In an example, an auto relocated block vector prediction (AR-BVP) may be included for creating an IBC list and/or an ITMP candidate list as in JVET-AF0129 and JVET-AG0063. The AR-BVP may be derived as a guiding BV plus a BV of a reference block, located by the guiding BV. An initial guiding BV may be set to be an existing BV already in the IBC candidate list and/or the ITMP candidate list.

More ITMP merge candidates may be included by using the BVs from a history-based list, such as but not limited to a history-based motion vector prediction (HMVP) list as in JVET-AG0074. In an example, one or more BVs may be stored in the HMVP list as in JVET-AF0079. However, the BVs in the HMVP list, as in JVET-AF0079, are only used in the IBC mode, and not in the ITMP mode. In an example, the ITMP merge candidate list may be extended with the HMVP candidate BVs as in JVET-AG0074. If the current block uses the ITMP mode and/or the IBC mode, the BV (e.g. the selected BV) of the block may be stored in a history-based BV list. The history-based BV list may be referenced by the IBC advanced motion vector prediction (AMVP), the IBC merge, and/or chroma DBV modes so that a previous coded BV information may be used to enhance the encoding efficiency of the current block. However, the ITMP mode does not use the history-based BV list. The HMVP list used in the ITMP mode may be the same as the HMVP list used in the IBC mode. In that, when performing the sparse searching process in the ITMP mode, the BVs of the HMVP list (e.g. encoded with the IBC/ITMP modes) may be added to the ITMP candidate list. During the refinement search, for additional BV candidates that are not within the predefined search range, a refinement search window may be expanded to 5x5, and the rest may be consistent with a default scheme.

The IBC may be used for both screen content coding, and for natural content, e.g. as in ECM. An IBC-coded CU may be treated as a separate prediction mode other than the intra and/or inter prediction modes (e.g. as in VVC etc.) or may be considered as part of inter mode (e.g. as in HEVC etc.). In the VVC and the ECM, the IBC may be an independent coding mode, with corresponding vector coding engine as compared with one or more motion vector coding schemes in the inter mode. Note that, previously in the HEVC, since both the IBC and the inter mode used vectors representing displaced blocks, the unified design of the IBC and the inter mode may be used, which is may not be used in the VVC and the ECM. In any case, the IBC prediction may be performed from the one or more reconstructed samples before an in-loop filtering.

The IBC is a predictive coding technology that explores one or more similarities, such as but not limited to repeating patterns, within same picture. In that, the current CU may be predicted by an already reconstructed reference block within the same picture (e.g. one or more reference samples derived from the reconstructed part of current picture). An offset from the current block to corresponding reference block may be referred as the BV and/or a displacement vector, i.e. a vector that indicates the displacement from the current block to the reference block. A merge mode and/or a skip mode may also be performed in the IBC mode.

Since the IBC mode is implemented as a block level coding mode, block matching (BM) may be performed at the encoder to find an optimal BV for each CU. A luma BV of an IBC-coded CU may be in integer precision (e.g. for simplicity reasons). A chroma BV may also round to an integer precision. The IBC mode may switch between 1-pel and/or 4-pel motion vector precisions, for example when combined with adaptive motion vector resolution (AMVR). In an example, the IBC mode may be applicable to one or more CUs (e.g. the one or more CUs with width and/or height smaller than or equal to 64 luma samples). A fractional block vector resolution may be used, e.g. for a natural content. The IBC is also known as an intra picture block compensation or a current picture referencing (CPR).

The IBC-coded CU may be treated as a third prediction mode other than the intra and/or inter prediction modes. The IBC mode may be applicable to the CUs with width and/or height smaller than or equal to 64 luma samples. At CU level, the IBC mode may be signaled with a flag, and it may be signaled as the IBC AMVP mode and/or the IBC merge mode as in one or more examples described below.

In an example, in the IBC merge mode, a merge candidate index may be used to indicate which of the BVs in the list may be used to predict the current block. A merge list may include one or more spatial, HMVP, and/or pairwise candidates. One or more auto-relocated block vector prediction (AR-BVP) candidates may also be added to the IBC merge list and/or an AMVP candidate list after the HMVP candidates. A template-based adaptive reordering (ARMC-TM) may be applied to the IBC merge list.

In an example, in the IBC AMVP mode, a block vector difference may be coded. A block vector prediction method may use two merge candidates as predictors, which may be selected from a list with a minimum cost (if IBC coded). When either neighbor is not available, a default block vector may be used as a predictor. The flag may be signaled to indicate a block vector predictor index. The IBC AMVP mode may use the same list as the IBC merge mode. It may be understood that the same list may be used for both, the IBC merge mode and the IBC AMVP mode (i.e. the IBC merge list and the IBC AMVP list). Since two lists may be the same, the IBC merge list and the IBC AMVP list may also be referred to as an IBC merge/AMVP list. A candidate from the IBC merge/AMVP list may be referred as to an IBC merge candidate and/or an IBC block vector predictor (BVP). Both, the IBC merge candidate and/or the IBC BVP may refer to the BV from the IBC merge list and/or the IBC AMVP list.

The generation and/or construction of the IBC merge list and/or the IBC AMVP list may be compared to the VVC in one or more of the following examples.

In an example, only if the IBC merge list and/or the IBC AMVP list candidate is valid, the candidate may be inserted into the IBC merge/AMVP candidate list. An above-right, a bottom-left, and/or an above-left spatial candidate (e.g. a spatial candidate belonging to an adjacent spatial candidate category) and one pairwise average candidate may be included in the IBC merge list and/or the IBC AMVP list. The spatial candidates may also be referred to as local candidates.

One or more history-based candidates from the HMVP list may also be added to the IBC merge list and/or the IBC AMVP candidate list. The HMVP table size for the IBC may be increased, for e.g. to 25. In an example, after up to 20 IBC merge candidates are derived with full pruning, the IBC merge candidates may be reordered together. After reordering, the first predetermined number of candidates (e.g. 6 candidates) with a lowest template matching cost may be selected as the final candidates in the IBC merge list and/or the IBC AMVP list.

A template-based adaptive reordering (ARMC-TM) may be applied to the IBC merge list and/or the IBC AMVP list. The IBC merge list and/or the IBC AMVP list may be generated in a fixed order, which may not be optimal. The ARMC-TM may be used in the IBC.

The one or more candidates from one or more non-adjacent spatial neighboring blocks (i.e. one or more non-adjacent candidates) may be added to the IBC merge list and/or the IBC AMVP list. The one or more non-adjacent candidates may be inserted between one or more adjacent spatial candidates and the HBVP candidates for both, the IBC merge mode and the IBC AMVP mode. The same reference area of the non-adjacent merge in a regular inter mode may be reused for the IBC mode. The one or more non-adjacent candidates may also be referred to as one or more non-local candidates.

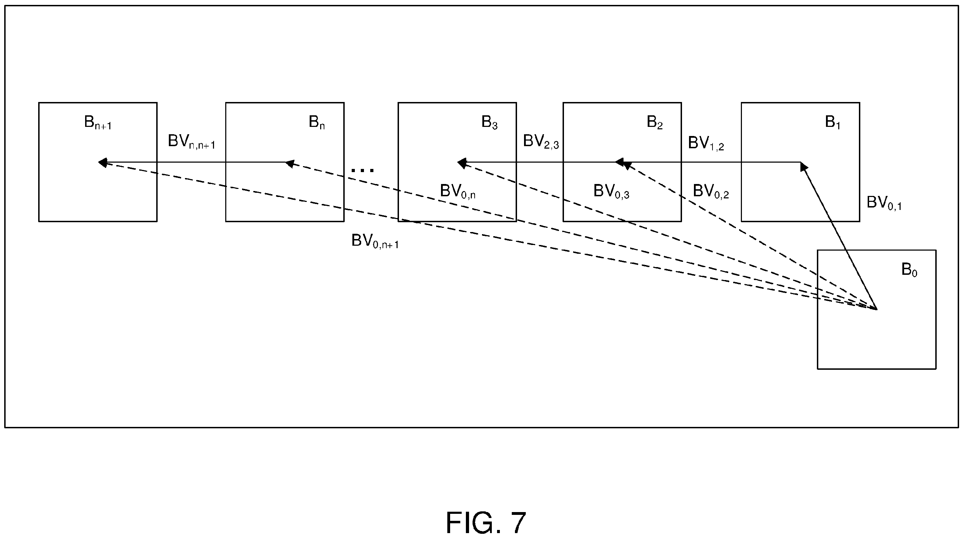

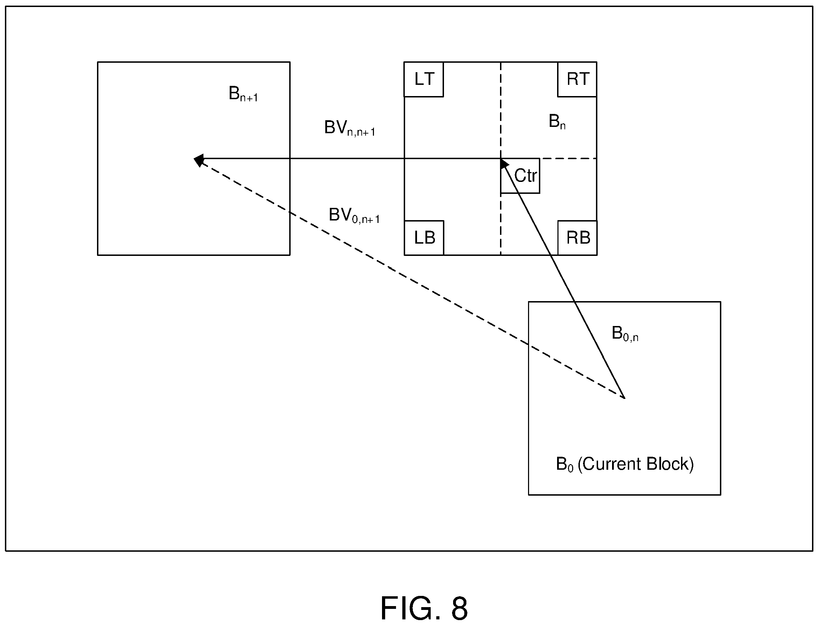

FIG. 7 illustrates an example derivation of the AR-BVP in which various aspects of the embodiments may be implemented. FIG. 8 illustrates one or more positions associated with a block in the AR-BVP in which various aspects of the embodiments may be implemented. One or more AR-BVP candidates may be added to the IBC merge list and/or IBC AMVP list after the HBVP candidates. As shown in FIG. 7, a guiding block vector $BV_{0,1}$ (i.e. an existing BVP already in the candidate list) associated with the current block $B_0$ points to a reference block $B_1$. If $B_1$ has a BV denoted as $BV_{1,2}$ pointing to a reference block $B_2$, then $BV_{0,2}$, given by $BV_{0,2} = BV_{0,1}+BV_{1,2}$, is defined as the AR-BVP, guided by $BV_{0,1}$. When deriving $BV_{n,n+1}$ guided by $BV_{0,n}$, all five positions including top-left (e.g. LT in FIG. 8), top-right (e.g. RT in FIG. 8), center (e.g. Ctr in FIG. 8), bottom-left (e.g. LB in FIG. 8), and bottom-right (e.g. RB in FIG. 8) positions of $B_n$ are checked to find $BV_{n,n+1}$. Restriction that adjacent spatial candidates cannot be used for IBC merge of a 4x4 CU may be removed.

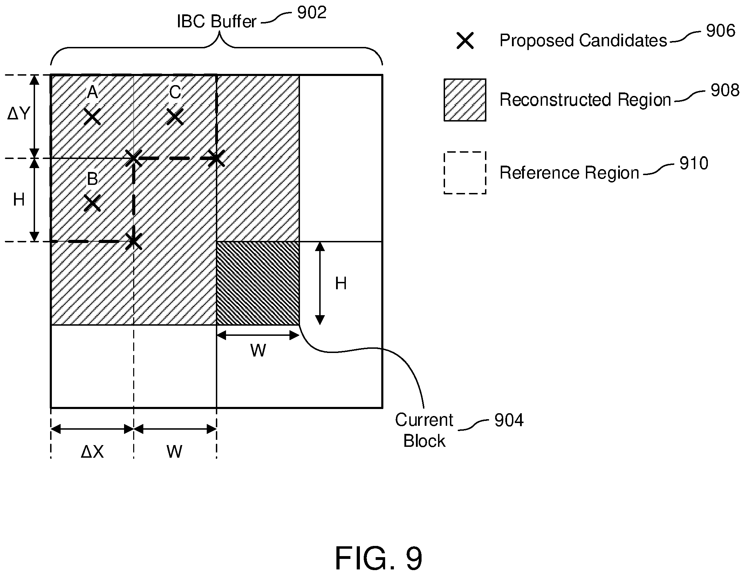

FIG. 9 illustrates an example one or more padding candidates for replacement of one or more zero vector candidates in the IBC merge list and/or the IBC AMVP list in which various aspects of the embodiments may be implemented. An IBC buffer 902 is shown in FIG. 9. One or more default zero vectors candidates used in inter mode to pad an inter merge list and/or an inter AMVP list may be replaced with a set of candidates located in an IBC reference region 910. A zero vector is invalid as a block vector in the IBC merge mode and/or the AMVP mode, and consequently, may be discarded as a candidate from the IBC candidate list. Three proposed candidates 906 may be used from a reconstructed region 908 for a current block 904. Three proposed candidates 906 are located on one or more nearest corners of the reference region 910, and three additional candidates may be determined in a middle of the three sub-regions (A, B, and C), whose coordinates may be determined by the width and/or the height of the current block 904 and the $\Delta X$ and $\Delta Y$ parameters, as is depicted in FIG. 9.

A bi-predictive IBC mode may be used to enhance the encoding performance of the IBC mode for natural and screen content as in JVET-AD0134, adopted into ECM version 10.0. In ECM version 9.0, the IBC mode generates the one or more prediction samples with only one BV, i.e., uni-predictive IBC, but still has room to improve the prediction accuracy of the IBC mode. Therefore, the IBC mode with two BVs, i.e., the bi-predictive IBC mode, in addition to the uni-predictive IBC mode may be used as in JVET-AD0134.

In a first example method of the bi-predictive IBC mode, e.g. an IBC AMVP-merge mode, the two required BVs may be derived from the IBC AMVP mode and the IBC merge mode, similar to the MV derivation of the AMVP-merge mode. Two different indices for the IBC AMVP mode and the IBC merge candidate may be signaled from the encoder to the decoder.

In a second example method, e.g. a bi-predictive IBC merge mode, may derive the two required BVs from the IBC merge list and/or the AMVP candidate list, thereby utilizing two different IBC merge indices. Two indices may be signaled from the encoder to the decoder. A target of the bi-predictive IBC merge mode may not only be a regular IBC merge but also an IBC merge mode with block vector difference (IBC-MBVD) and an IBC geometric partitioning mode (IBC-GPM), which are enabled in ECM-8.0 for the screen content. The bi-predictive IBC-MBVD may be enabled in the natural content and the screen content, while the bi-predictive IBC-GPM may be enabled only in the screen content.

In an example, for generating and/or constructing one or more merge candidate lists, both methods may reuse the existing IBC merge list and/or the IBC AMVP list construction scheme for the uni-predictive IBC merge mode as in ECM-8.0. For BV refinement, both methods may enable the existing IBC with the template matching as in ECM-8.0. For compensation, both methods may generate one or more final IBC prediction samples with a simple (1:1) average of bi-predictive IBC samples. For BV storage, the two BVs may be stored for future use (e.g. in the IBC mode and/or the ITMP merge mode) when the bi-predictive IBC is enabled. For signaling, a control flag of a bi-predictive IBC Bi_IBC_flag may be signaled at a slice level in I slice, whereas not signaled in B and/or P slices. A reconstructed reordered IBC may be disabled when the bi-predictive IBC is enabled in ECM-8.0. In an example, both methods may be enabled in one or more chroma component blocks of a single tree.

The template matching (TM) may be used in the IBC for both, the IBC merge mode and the IBC AMVP mode.

An IBC-TM merge list may be modified compared to the one used by the regular IBC merge mode and/or the IBC AMVP mode such that the candidate may be selected according to a pruning method with a motion distance between the candidate as in the regular TM merge mode. The ending zero motion fulfillment may be replaced by one or more motion vectors to the left (-W, 0), top (0, -H) and/or the top-left (-W, -H), where W is the width and H the height of the current CU.

In an IBC-TM merge mode, the selected candidates may be refined with the template matching method prior to a rate distortion optimization (RDO) and/or a decoding process. The IBC-TM merge mode may be in competition with the regular IBC merge mode and a TM-merge flag may be signaled.

In the IBC-TM AMVP mode, up to 3 candidates may be selected from the IBC-TM merge list. Each of those 3 selected candidates may be refined using the template matching method and sorted according to corresponding resulting template matching cost. Only top two candidates may be considered in the motion estimation process.

The template matching refinement for both, the IBC-TM merge mode and/or the IBC AMVP modes may use the IBC motion vectors constrained to be integers and/or within a reference region. In the IBC-TM merge mode, all refinements may be performed at an integer precision, and in the IBC-TM AMVP mode, the refinements may be performed at an integer and/or 4-pel precision based on the AMVR value. Such a refinement may access samples without interpolation. In both cases, the refined motion vectors and/or the used template in each refinement step must respect the constraint of the reference region.

In an example, one or more IBC block vectors may be inserted into a history-based list for future referencing, e.g. for the HMVP.

The one or more BVs derived using the ITMP may be stored and/or used in the IBC mode. In that, the one or more BVs derived from the ITMP may be used for the IBC mode. In that, one or more ITMP BVs of the neighboring blocks along with one or more IBC BVs may be used as spatial BV candidates in the IBC candidate list construction (e.g. the IBC merge list and/or the IBC AMVP list).

The one or more ITMP BVs of one or more previous blocks may also be used in the ITMP merge mode as in ECM-12.0.

An ITMP BV may be stored and a current IBC block may use both, the IBC BV and the ITMP BV of the neighboring blocks as a candidate in the IBC merge list and/or the IBC AMVP candidate list. In other words, if the neighboring CU is coded in the ITMP mode, the corresponding ITMP BV may be added to the IBC merge list and/or the IBC AMVP list.

The ITMP BVs may be added to the IBC BV candidate list as the spatial candidates (e.g. local and/or non-local candidates) since the ITMP BVs may be fetched from the neighboring blocks. The ITMP BVs may be stored in a quarter-pel resolution for coding of the IBC BVs.

The ITMP BVs may be stored for the coding one or more future IBC blocks and/or one or more future ITMP blocks, after coding the current block in the ITMP mode.

Same as with the IBC BVs, the ITMP BVs may be added into the history-based list for future referencing, e.g. for the HMVP mode. In an example, reference to the ITMP BV may refer to the final selected block of an ITMP CU which may be indicated with the itmp_idx (or the intra_tmp_idx).

If the neighboring CU is coded in the ITMP mode, the selected ITMP BV may be indicated by the ITMP index (e.g., the intra_tmp_idx and/or itmp_idx etc.) signaled in the bitstream, for example. As described herein, the selected ITMP BV may or may not be the one with the smallest (i.e. least) template cost. The BV with the least template cost (e.g. the BV may be may a first candidate on a final ITMP candidate list, for example) may be the BV with the itmp_idx equal to 0. The BV with the best and/or smallest and/or least template matching cost may be denoted here as a best-by-cost ITMP BV.

Similarly, in the IBC with TM reordering, after the TM, at least one candidate may be selected from the IBC merge list and/or the IBC AMVP list, and the selected candidate may or may not be the one with the least TM cost. The BV with the best and/or smallest and/or least template matching cost may be denoted here as a best-by-cost IBC block vector.

The BV with the best and/or smallest and/or least template matching cost, whether it is IBC or ITMP BV is denoted here as a best-by-cost BV.

In the ITMP merge mode, one or more merge candidates may be fetched from the neighboring CUs coded in the ITMP mode and/or the IBC mode. For generating and/or constructing the ITMP merge list, if the neighboring CU is coded in the ITMP mode and the itmp_idx is greater than 0 (itmp_idx>0), the selected ITMP BV and the best-by-cost BV of the neighboring CU may be added as the ITMP merge candidates. The ITMP merge list may include the selected ITMP block vector indicated with the itmp_idx and the vector with itmp_idx equal to 0 (the one with the best and/or smallest and/or least TM cost, i.e. the best-by-cost ITMP BV). The selected BV and the best-by-cost BV may be the same, for example, if the intra_tmp_idx is equal to 0, in which case one of the selected BV and best-by-cost BV may be included in the ITMP merge list. Hence, if one of the neighboring CUs is coded with the ITMP mode, two vectors may be added to the ITMP merge list, e.g., if itmp_idx>0.

In the IBC merge mode and/or the AMVP mode, the candidates may also be fetched from the neighboring CUs coded in the ITMP mode and/or the IBC mode. However, compared to the ITMP merge list, the IBC merge list and/or the AMVP list may use the selected BV from the neighboring CU coded with the ITMP mode. The best-by-cost BV, in case when the itmp_idx is greater than 0 (itmp_idx>0), may not be included in the IBC merge list and/or the IBC AMVP list. Also, the best-by-cost IBC BV may not be included in the IBC merge list and/or the IBC AMVP list neither in the ITMP merge list.

For improving a compression efficiency of state-of-the-art video codecs, in particular for blocks coded in the IBC mode when the IBC merge list and/or the IBC AMVP list may be utilized and/or for blocks coded in the ITMP mode when the ITMP merge list may be utilized, the coding performance may be improved by storing the best-by-cost ITMP BV and/or the best-by-cost IBC BV, and further including the best-by-cost BV in the IBC merge list and/or the IBC AMVP list and/or the ITMP merge list. The IBC merge list and/or the IBC AMVP list and/or the ITMP merge list may be enriched with new and/or additional candidates leading to better performance.

In an embodiment, an ITMP performance may be improved by storing the best-by-cost IBC BV of the IBC coded CU, and further the best-by-cost IBC BV in the ITMP merge list. The ITMP merge list may be enriched with new and/or additional candidates leading to the better performance. Also, the best-by-cost IBC BV may be included when constructing the IBC merge list and/or the IBC AMVP list. Since the best-by-cost ITMP BV is already included in the ITMP merge list, the best-by-cost ITMP BV may be considered when creating the IBC merge list and/or the IBC AMVP list.

The IBC may use the TM reordering of the IBC merge list and/or the IBC AMVP list. After the TM reordering, one candidate may be selected (whether in the IBC merge list and/or the IBC AMVP list) and signaled to the decoder, which may be same or different from the candidate with the least cost. In this case, one additional BV candidate from the IBC merge list and/or the IBC AMVP list may be stored and used later. For example, the neighboring IBC candidates may be used in the IBC mode and/or the ITMP merge mode. Then, the neighboring CU may be coded in the IBC mode, when fetching the BV, the current CU may fetch the selected IBC BV and/or best-by-cost IBC BV of the neighboring CU.

In an embodiment, the best-by-cost ITMP candidate and/or the best-by-cost IBC candidate (when reordering of the IBC candidates is enabled, e.g. based on the TM cost) may be stored in the IBC merge list and/or the IBC AMVP list. In addition, the best-by-cost IBC candidate (when reordering of the IBC candidates is enabled, e.g. based on the TM cost) may be stored in the ITMP merge list.

If the CU is coded with the ITMP mode, the encoder and/or the decoder may store the best-by-cost ITMP BV for future use, e.g. in the IBC prediction mode. The two BVs may be stored when the ITMP mode is enabled and added to the IBC merge list and/or the IBC AMVP list.

If the CU is coded with the IBC mode, and reordering of the IBC candidates is enabled, the encoder and/or the decoder may store the best-by-cost IBC BV for future use, e.g. in the IBC mode and/or the ITMP merge mode. The two BVs may be stored when the IBC mode and/or the reordering mode (e.g., the TM reordering) is enabled. If the neighboring CU is coded with the ITMP mode and/or the IBC mode, the best-by-cost BV may be added in the IBC merge list and/or the IBC AMVP list. If the neighboring CU is coded in the IBC mode, the encoder and/or the decoder may add the best-by-cost IBC BV in the ITMP merge list.

In some examples, the selected BV and the best-by-cost BVs may be the same. In that case, one candidate may be stored and/or included in the IBC merge list and/or the IBC AMVP list and/or the ITMP merge list. The method enhances the efficiency of the IBC mode and/or the ITMP mode by using diverse BVs.

In many embodiments, the encoding method and/or the encoder and/or the decoding method and/or the decoder may store and/or propagate the one or more BVs which currently may not be used for encoding and/or decoding the current block, however, may be potentially good BVs that can be used for encoding and/or decoding other blocks and/or next blocks.

In an embodiment, the method may be equally applicable and effective to any mode and/or any coding technique that uses the TM and/or that sorts a plurality of candidates based on one or more criteria, such as but not limited to the cost. The method enables the sorting and then uses a candidate from the plurality of candidates, out of which one or more candidates may be selected as final candidates, and stores both, one or more best-by-criterion candidates and the selected candidates. Any of the one or more best-by-criterion candidates and the selected candidates may be used for encoding and/or decoding. If the candidate with a best criterion (i.e. the best-by-criterion candidate) is not be the selected candidate, the best-by-criterion candidate may be stored and/or propagated.

In order to utilize the previous coding information (e.g. the MVs, the BVs, one or more affine model parameters, one or more cross-component prediction (CCP) models, and/or one or more extrapolation filter-based intra prediction (EIP) mode parameters, etc.) of previously coded blocks which may not be neighboring blocks to the current block, a plurality of history-based lists may be maintained at the encoder and the decoder.

The plurality of history-based lists comprising one or more previously coded motion vectors may be maintained for coding future blocks in the inter mode as per the VVC and ECM-7.0. The MVs from the history-based lists may be used as potential candidates when constructing an inter-merge candidates list and/or an inter-AMVP candidates list. One or more HMVP merge candidates may be added to the IBC merge list and/or the IBC AMVP list after the spatial MVP and the TMVP in the inter prediction. In that, the motion information of the one or more previously coded blocks may be stored in a table (e.g. an HMVP table, list, and/or buffer etc.) and used as predictors for the current CU. The table with multiple HMVP candidates may be maintained during the encoding and/or decoding processes. The table may be reset (i.e. emptied) when a new CTU row is encountered. Whenever there is a non-subblock inter-coded CU, the associated motion information may be added to the last entry of the table as a new HMVP candidate.

In an example, a predetermined size may be set for the HMVP table size (e.g. size 6, which indicates up to 6 HMVP candidates may be added to the table). When inserting the new and/or additional MV candidate to the table, a constrained first-in-first-out (FIFO) rule may be utilized wherein redundancy check is applied to find whether there is an identical HMVP in the table. If found, the identical HMVP may be removed from the table and all the HMVP candidates afterwards may be moved forward, and the identical HMVP may be inserted as a last entry of the table.

The HMVP candidates may be used in the inter merge candidate list construction. The latest several HMVP candidates in the table may be checked in order and inserted to the inter merge list and/or the inter AMVP candidate list after the TMVP candidate. Redundancy check may be applied on the HMVP candidates to the spatial and/or temporal merge candidate.

To reduce a number of redundancy check operations, last two entries in the table may be redundancy checked to above (A) and left (L), spatial candidates, respectively. Once a total number of available merge candidates reaches a maximally allowed merge candidates minus 1, the merge candidate list construction process from the HMVP may be terminated.

The HMVP candidates may also be used in the construction and/or generation of the AMVP candidate list. A first several HMVP candidates in the table may be checked in order and inserted to the candidate list after the TMVP candidate.

The TM may be used as a decoder-side MV derivation method to refine the motion information of the current CU. In the AMVP mode, the MVP candidate may be determined based on a TM cost to select the one which reaches a minimum difference between the current block template and the reference block template, and then the TM may be performed only for a particular MVP candidate for MV refinement. The TM may refine the MVP candidate, starting from full-pel MVD precision (or 4-pel for 4-pel AMVR mode) within a [-8, +8]-pel search range by using iterative 16-point diamond search. The AMVP candidate may be further refined by using cross search with full-pel MVD precision (or 4-pel for 4-pel AMVR mode), followed sequentially by half-pel and quarter-pel ones depending on the AMVR mode. The search process may ensure that the MVP candidate may maintain the same MV precision as indicated by the AMVR mode after the TM process. In the search process, if the difference between the previous minimum cost and the current minimum cost in an iteration is less than a threshold that is equal to the area of the block, the search process may terminate. In the merge mode, similar search method may be applied to the merge candidate indicated by the merge index. The TM may perform all the way down to 1/8-pel MVD precision or skipping those beyond half-pel MVD precision, based on whether an alternative interpolation filter (that is used when AMVR is of half-pel mode) is used according to merged motion information. Besides, when the TM mode is enabled, the TM may work as an independent process or an extra MV refinement process between block-based and/or subblock-based bilateral matching methods, depending on whether the bilateral matching can be enabled or not according to an enabling condition check. Also, a multi-pass decoder-side motion vector refinement may be applied. In a first pass, the bilateral matching may be applied to the coding block. In a second pass, the bilateral matching may be applied to each 16x16 subblock within the coding block. In a third pass, the MV in each 8x8 subblock may be refined by applying bi-directional optical flow (BDOF). The refined MVs may be stored for both, spatial and temporal MV prediction. In this case, a bilateral matching cost may be obtained and candidates may be ranked based on the bilateral matching cost.

In the VVC, the IBC mode may maintain one or more history-based lists. For the HMVP, the IBC block vector may be inserted into the one or more history-based lists for future referencing. The IBC may share same and/or similar process as in the regular MV merge including pairwise merge candidates and/or history-based motion predictors but may disallow the TMVP and the zero vectors as invalid for the IBC mode. One or more separate HMVP buffers and/or separate history-based lists may be used for conventional MV and IBC. In an example, the HMVP table size for the IBC mode may be increased to 25 in ECM, as in see JVET-Z0075. For example, in ECM-13.0 there are separate history-based lists for inter MVs, one for the IBC and the ITMP BVs, and one for the affine motion information.

In an example, one or more non-local CCP and/or CCP merge modes may be used as in JVET-AD0188 and JVET-AG2025. For chroma coding, a flag may be signaled to indicate whether the CCP mode and/or non-CCP mode (conventional chroma intra prediction mode, fusion of chroma intra prediction mode) is used. If the CCP mode is selected, a flag may be signaled to indicate how to derive the CCP type and parameters, i.e., either from a CCP merge list and/or signaled and/or derived on-the-fly. The CCP merge list may be constructed from the spatial adjacent, temporal, spatial non-adjacent, history-based and/or shifted temporal candidates etc., for example. One or more default models may be further included to fill one or more remaining empty positions in the merge list. In order to remove one or more redundant CCP models in the list, a pruning operation may be performed. After generating and/or constructing the list, the CCP models in the list may be reordered depending on the SAD costs, which may be obtained using the neighboring template of the current block. The positions and/or inclusion orders of the spatial adjacent and/or non-adjacent candidates may be the same as those defined in the ECM for regular inter merge prediction candidates. One or more temporal candidates may be selected from a collocated picture. The position and/or inclusion orders of the temporal candidates may be the same as those defined in the ECM for regular inter merge prediction candidates. The shifted temporal candidates may also be selected from the collocated picture. The position of the temporal candidates may be shifted by a selected MV which may be derived from the MVs of the neighboring blocks. The history-based table may be maintained to include the recently used CCP models, and the history-based table may be reset at a beginning of each CTU row. If a current CCP model list (e.g. CCP merge list) is not full after including spatial adjacent and/or non-adjacent candidates, the CCP models in the history-based table may be added into the CCP list. Hence, history-based information of the CCP mode may be maintained in the history-based list and/or a history-based buffer.

Similarly, one or more EIP parameters may be stored in an EIP history-based buffer and/or an EIP history-based list for future use. A filter shape and/or one or more filter coefficients may be inherited from the previously decoded blocks with EIP mode and/or EIP merge mode. The decoder may decode an EIP merge flag to decide whether the proposed merge mode is used when the current block uses the EIP mode. A merge index may be further decoded when the EIP merge flag is true. An EIP merge list may include spatial adjacent and non-adjacent candidates, temporal candidates, and/or history candidates. The constructed EIP merge list may include up to 12 candidates and the EIP merge list may be reduced to up to 6 candidates by the reordering process based on the SAD cost measured on a 1 column and 1 row template. The positions and/or inclusion orders of the spatial adjacent, temporal, non-adjacent, shifted temporal and/or history candidates may be the same as those defined for the CCP merge prediction candidates.

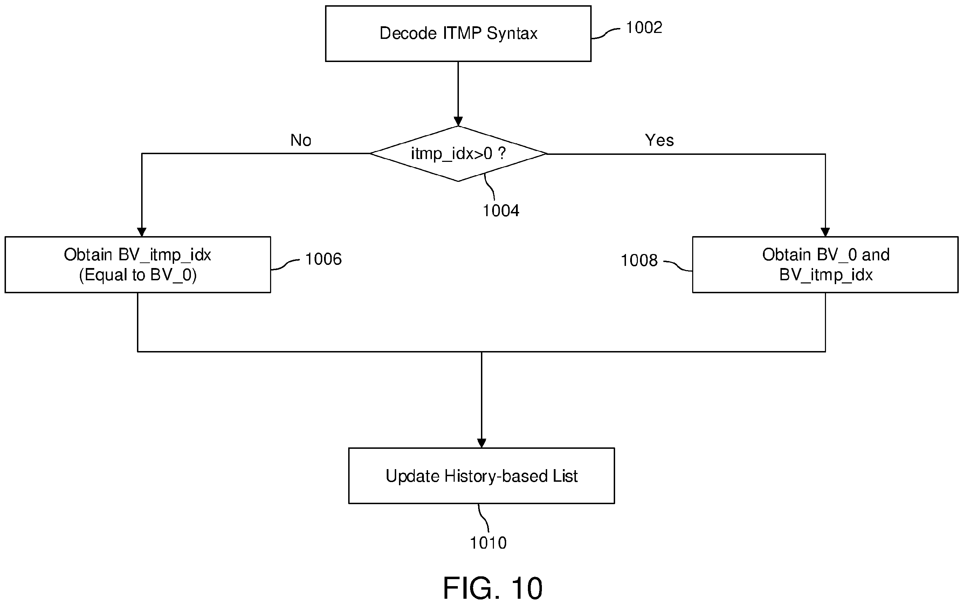

FIG. 10 illustrates an example process of storing selected candidate and/or best-by-criterion candidate in the history-based lists in which various aspects of the embodiments may be implemented. The history-based list is utilized to enrich the candidates used for predicting the current block. In an example, the criterion shown in FIG. 10 is the cost for the ITMP mode. Here, the ITMP mode is used as an illustrative example, that is, the process may use any prediction mode including but not limited to the ITMP mode. The encoder may select one candidate from the plurality of candidates and signal to the decoder. In case the selected candidate is not the one being with the smallest cost (i.e. the best-by-cost candidate) at the same time, in such a case, the best-by-cost candidate may also be added to an appropriate history-based list.

In an example, multiple other history-based lists may be stored, maintained and/or synchronized within the encoder and/or the decoder. The selected candidate (e.g. the selected BV and/or the selected MV etc.) and/or selected sets of parameters (e.g. EIP parameters and/or CCP parameters etc.) may be added to an appropriate history-based buffer and/or an appropriate history-based list. In an embodiment, the encoder and/or the decoder may add (i.e. store) the best-by-cost candidate in the appropriate history-based list, given that the best-by-cost candidate exists and is not the same as the selected candidate. For example, the candidates may include MVs and/or BVs, and the candidates may also include other parameters (e.g. the CCP models and/or the EIP filters) which may also be stored, maintained, and/or propagated using the history-based lists.

In an example, both, the encoder and/or the decoder may know the best-by-cost candidates, and may maintain the history-based lists. In case of the reordering of the candidates, the candidates may be stored by the best-by-cost metric in the history-based lists. However, the encoding method and/or the encoder and/or the decoding method and/or the decoder are not limited to using the cost (e.g. TM cost, bilateral matching cost, etc.) as the criterion and may function equally effectively for a variety of criteria and/or different types of criteria. Further, the encoding method and/or the encoder and/or the decoding method and/or the decoder are also not limited to any specific encoding and/or decoding modes, and may function equally effectively for a variety of encoding and/or decoding modes and/or different types of encoding and/or decoding modes. The encoding method and/or the encoder and/or the decoding method and/or the decoder may be implemented in any method and/or system whenever the selected candidate may or may not be the one with the best criteria, such as but not limited to the best-by criterion candidate and/or the best-by-cost candidate (e.g. the TM cost).

At 1002, the encoder and/or the decoder (or a codec such as but not limited to a video codec) may decode the ITMP syntax. Here, the ITMP mode may be used. At 1004, the codec may obtain the index of the selected candidate. That is, the codec may check if the index of the selected candidate is equal to zero or greater than zero. At 1008, when block is coded in ITMP mode and the itmp_idx>0, the best-by-cost candidate may be added in the history-based list and also the selected candidate may be added to the history-based list. At 1006, if the itmp_idx is 0, the selected candidate and the best-by-cost candidate are equal and in that case only one BV candidate may be added to the history-based list (e.g. the HMVP list). At 1010, the codec updates the history-based list based on the index of the selected candidate.

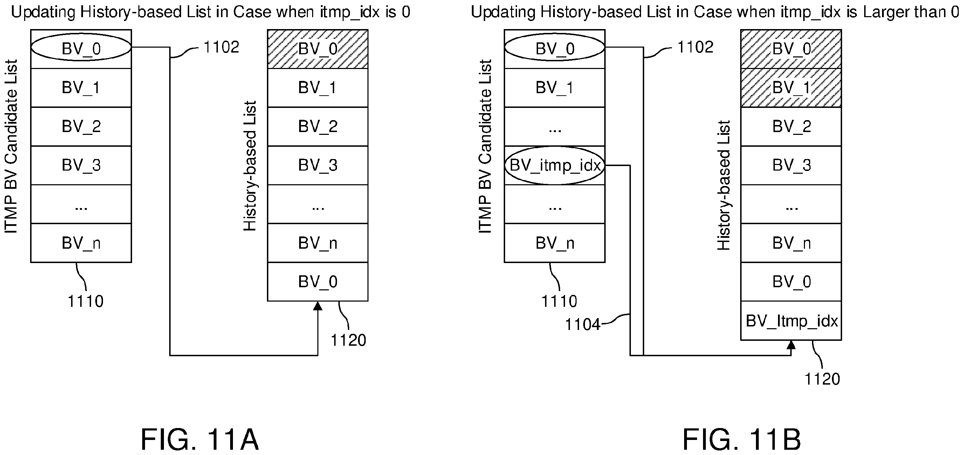

FIGS. 11A and 11B illustrate an example process for updating a history-based list based on an index of the selected candidate in which various aspects of the embodiments may be implemented. The process may be performed by the encoder and/or the decoder (e.g. the codec). As shown in FIG. 11A, the codec may store a plurality of candidates 1110 which may be sorted based on one or more criteria. The codec may determine an appropriate criterion based on the encoding and/or the decoding modes and may sort the plurality of candidates 1110 based on the criterion. In an example, the criteria may be a cost such as a template matching cost. The codec may assign indexes to the sorted plurality of candidates 1110. In FIG. 11A, the index of the selected candidate is equal to zero (i.e. itmp_idx=0). That is, a selected candidate BV 1102 is the best-by-cost candidate BV. Therefore, the codec may store the selected candidate BV 1102 into a history-based list 1120. In FIG. 11B, the index of the selected candidate is not equal to zero (i.e. itmp_idx>0). Therefore, the selected candidate BV 1104 is not the best-by-cost candidate BV. The codec may determine the best-by-cost candidate BV 1102 from the plurality of candidates 1110. Thereafter, the codec may store the selected candidate BV 1104 and the best-by-cost candidate BV 1102 into the history-based list 1120.

In an example, the best-by-cost ITMP BV candidate may be added instead of the selected BV candidate. In another example, the best-by-cost candidate may be added in the list after (or before) the selected ITMP BV candidate. In an example, a combination of the selected BV candidate and the best-by-cost BV candidate may be added to the history-based list. The combination may include, for example, an average of the two candidates, viz. the selected BV candidate and the best-by-cost BV candidate.

When a video block is coded in the IBC mode, and the reordering is used in the IBC, the best-by-cost BV candidate may be stored in the history-based list if the best-by-cost BV candidate is not the same as the selected BV candidate. If the selected BV candidate and the best-by-cost BV candidate are the same, in that case, only one BV candidate of the selected BV candidate and the best-by-cost BV candidate may be stored to the history-based list (e.g. the HMVP list). In an example, the best-by-cost IBC BV candidate may be stored instead of the selected BV candidate. In another example, the best-by-cost BV candidate may be stored in the list after (or before) the selected IBC BV candidate. In an example, a combination of the selected BV candidate and the best-by-cost BV candidate may be stored in the history-based list. The combination may include, for example, an average of the two BV candidates, viz. the selected BV candidate and the best-by-cost BV candidate.

When the video block is coded in the inter mode, reordering and/or the MV candidates may be used (e.g. based on TM cost and/or based on bilateral matching cost), and the best-by-cost MV candidate may be stored in the history-based list if the best-by-cost MV candidate is not the same as the selected MV candidate. If the selected MV candidate and the best-by-cost MV candidates are the same, in that case only one MV candidate may be stored in the history-based list (e.g. the HMVP list). In one variant, the best-by-cost inter MV candidate may be stored instead of the selected MV candidate. In one variant, the best-by-cost MV candidate may be stored in the list after (or before) the selected inter MV candidate. In one variant, a combination of the selected inter MV candidate and the best-by-cost MV candidate may be stored in the history-based list. The combination may include, for example, an average of the two candidates, viz. the selected inter MV candidate and the best-by-cost MV candidate.

Upon generating and/or constructing the CCP list, the CCP models in the list may be reordered based on the SAD costs. One CCP model may be selected for encoding and/or decoding the current block. The selected CCP model may be stored in the CCP history-based list. In case that the best-by-cost CCP model is not the same as the selected CCP model used for the current block, the best-by-cost CCP model may also be stored in the CCP history-based list. The best-by-cost CCP model may be stored after (or before) the selected CCP model.

Upon generating and/or constructing the EIP merge list (for e.g. including up to 12 candidates), the EIP merge list may be reduced to up to 6 candidates by the reordering process based on the SAD cost. After reordering, one EIP candidate (e.g. one EIP parameter) may be selected for encoding and/or decoding the current block. The selected EIP parameter (i.e. the selected EIP candidate) may be stored in an EIP history-based list. In case that the best-by-cost EIP candidate (i.e. the best-by-cost EIP parameter) is not the same as the selected EIP candidate (i.e. the selected EIP parameter) used by the current block, the best-by-cost EIP candidate may be stored in the EIP history-based list. The best-by-cost EIP candidate may be added after (or before) the selected EIP candidate.

After adding candidates to the history-based list (including the best-by-cost candidates) the history-based list may be used for encoding and/or decoding of the next blocks and/or the future blocks. The encoder and/or the encoding method and/or the decoder and/or the decoding method may also perform the pruning of the history-based lists, checking if the candidates are already present in the history-based lists (e.g. redundancy checks), and/or any other such processes.

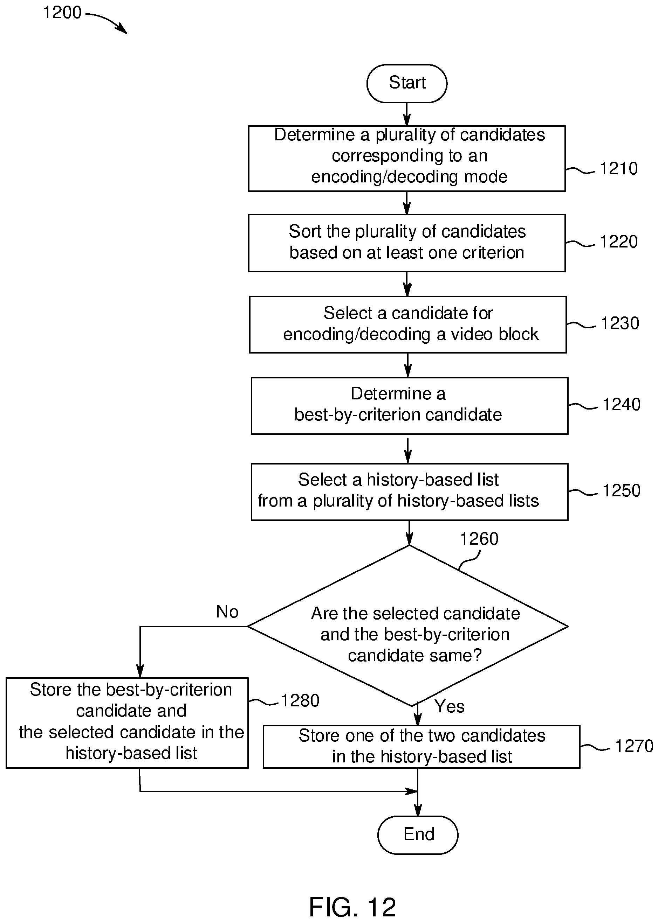

FIG. 12 illustrates a flowchart of an example encoding and/or decoding method 1200 in which various aspects of the embodiments may be implemented. The method 1200 may be implemented by the encoder and/or the decoder (e.g. the codec) configured to encode and/or decode the video data including a plurality of video blocks. At 1210, the codec determines the plurality of candidates for encoding and/or decoding a video block of the plurality of video blocks. The plurality of candidates may correspond to the encoding mode and/or the decoding mode used to encode and/or decode the video block. Examples of the encoding modes and/or the decoding modes include but are not limited to the ITMP modes, the ITMP merge modes, the IBC modes, the bi-IBC modes, the uni-IBC modes, the inter prediction modes, the intra prediction modes, the CCP modes, the EIP modes, the AR-BVP modes, the IBC merge modes, and/or the IBC AMVP modes etc. It may be understood that the codec may implement a variety of encoding and/or decoding modes, and is not limited to the above listed modes. Examples of the candidates include but are not limited to BVs, MVs, CCP models, and/or EIP parameters etc.

At 1220, the codec sorts the plurality of candidates based on one or more criteria. Examples of the criteria used for sorting include but are not limited to different types of costs for the BVs (e.g. the TM cost etc.), different types of costs for the MVs (e.g. the bilateral matching costs, the TM costs etc.), different types of cost for the CCP models (e.g. the SAD, the TM cost, etc.), different types of costs for the EIP parameters (e.g. the SAD, the TM cost, etc.). The codec may assign indexes to the sorted candidates. In an example, the best candidate for the criteria, i.e., the best-by-criterion candidate (e.g. candidate having the least cost, i.e., the best-by-cost candidate) may be sorted at the top of the list. That is, the list may be in the ascending order and the best-by-criterion candidate (e.g. the best-by-cost candidate) may be assigned the index of zero, i.e., the first candidate in the sorted list.

In an example, the codec may also shortlist a set of candidates from the sorted list of candidates. For example, the set of candidates may be fewer than the sorted list of candidates. This may facilitate efficient signaling and reduced overhead.

At 1230, the codec may select a candidate for encoding and/or decoding. At 1240, the codec may determine the best-by criterion candidate. In an example, the codec may use the same criterion or may also use a different criterion for selecting the candidate. Therefore, the selected candidate may or may not be same as the best-by-criterion candidate.

At 1250, the codec may select the history-based list from the plurality of history-based lists corresponding to the encoding and/or decoding modes. In that, the codec may store and/or maintain multiple history-based lists such as but not limited to one or more ITMP lists, IBC lists, CCP lists, EIP lists, inter mode lists, and/or other such lists used for encoding and/or decoding the video block. In an example, the history-based lists may be propagated to and/or synchronized between the encoder and the decoder.

At 1260, the codec may check if the selected candidate and the best-by-criterion candidate are the same. If the codec determines that the selected candidate and the best-by-criterion candidate are the same, at 1270, the codec may store one of the selected candidate or the best-by-criterion candidate in the selected history-based list.

If the codec determines that the selected candidate and the best-by-criterion candidate are not the same, at 1280, the codec may store the best-by-criterion candidate in the selected history-based list. At 1280, the codec may also store the selected candidate in the selected history-based list. In that, the codec may update the history-based list based on the index of the selected candidate and/or the index of the best-by-cost candidate. In more examples, the codec may determine a combination of the selected candidate and the best-by-criterion candidate. The combination may include but is not limited to the average of the selected candidate and the best-by-criterion candidate. The codec may store the combination of the selected candidate and the best-by-criterion candidate in the selected history-based list.

In an implementation, the present disclosure includes a method performed by an encoder for encoding a video block. The method comprises determining a plurality of candidates corresponding to an encoding mode. The plurality of candidates are sorted based on at least one criterion associated with the encoding mode. The method includes selecting a candidate from the plurality of candidates for encoding the video block. The method further includes determining a best-by-criterion candidate from the plurality of candidates. At least one history-based list corresponding to the encoding mode is selected from a plurality of history-based lists. The method includes storing the best-by-criterion candidate in the at least one history-based list if the best-by-criterion candidate is different from the selected candidate.

In an implementation, the method further includes determining a cost for each candidate of the plurality of candidates. The plurality of candidates are sorted in an ascending order of corresponding costs. The method includes assigning an index to the each candidate of the plurality of candidates based on the corresponding cost.

In an implementation, the best-by-criterion candidate is the candidate from the plurality of candidates corresponding to a least cost.

In an implementation, the method further includes transmitting a signal indicative of one or more of: the encoding mode or the index associated with the selected candidate.

In an implementation, the method includes determining a combination of the best-by-criterion candidate and the selected candidate when the best-by-criterion candidate is different from the selected candidate. The method includes storing the combination of the best-by-criterion candidate and the selected candidate in the at least one history-based list.

In an implementation, each history-based list of the plurality of history-based lists corresponds to at least one distinct prediction mode.

In an implementation, the at least one distinct prediction mode comprises an intra template matching prediction mode, an intra block copy mode, an inter prediction mode, a CCP mode, or EIP mode.

In an implementation, the plurality of candidates comprise one or more of: a plurality of block vectors, a plurality of motion vectors, a plurality of CCP models, or a plurality of EIP mode parameters.

In an implementation, an encoder for encoding a video block is provided. The encoder comprises a memory configured to store a plurality of history-based lists. The encoder further comprises one or more processors coupled to the memory. The one or more processors are configured to determine a plurality of candidates corresponding to an encoding mode. The encoder sorts the plurality of candidates based on at least one criterion associated with the encoding mode. The encoder selects a candidate from the plurality of candidates for encoding the video block. The encoder determines a best-by-criterion candidate from the plurality of candidates. The encoder selects at least one history-based list of the plurality of history-based lists corresponding to the encoding mode. The encoder stores the best-by-criterion candidate in the at least one history-based list if the best-by-criterion candidate is different from the selected candidate.

In an implementation, the encoder determines a cost for each candidate of the plurality of candidates. The encoder sorts the plurality of candidates in an ascending order of corresponding costs. The encoder assigns an index to the each candidate of the plurality of candidates based on the corresponding cost.

In an implementation, the encoder transmits a signal indicative of one or more of: the encoding mode or the index associated with the selected candidate.

In an implementation, the encoder determines a combination of the best-by-criterion candidate and the selected candidate when the best-by-criterion candidate is different from the selected candidate. The encoder stores the combination of the best-by-criterion candidate and the selected candidate in the at least one history-based list.

Various methods are described herein, and each of the methods comprises one or more steps or actions for achieving the described method. Unless a specific order of steps or actions is required for proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an ordering to the modified operations unless specifically required. So, in this example, the first decoding need not be performed before the second decoding, and may occur, for example, before, during, or in an overlapping time period with the second decoding.

Moreover, the present aspects are not limited to V-PCC, G-PCC, P11, or V-DMC, and can be applied, for example, to other standards and recommendations, and extensions of any such standards and recommendations. Unless indicated otherwise, or technically precluded, the aspects described in this application can be used individually or in combination. Various numeric values are used in the present application. The specific values are for example purposes and the aspects described are not limited to these specific values.

Various implementations involve decoding. "Decoding," as used in this application, may encompass all or part of the processes performed, for example, on a received encoded sequence in order to produce a final output suitable for display. In various embodiments, such processes include one or more of the processes typically performed by a decoder, for example, entropy decoding, inverse quantization, inverse transformation, and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application may encompass all or part of the processes performed, for example, on an input video sequence in order to produce an encoded bitstream.

The implementations and aspects described herein may be implemented in, for example, a method or a process, an apparatus, a software program, a data stream, or a signal. Even if only discussed in the context of a single form of implementation (for example, discussed only as a method), the implementation of features discussed may also be implemented in other forms (for example, an apparatus or program). An apparatus may be implemented in, for example, appropriate hardware, software, and firmware. The methods may be implemented in, for example, an apparatus, for example, a processor, which refers to processing devices in general, including, for example, a computer, a microprocessor, an integrated circuit, or a programmable logic device. Processors also include communication devices, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment. Additionally, this application may refer to "determining" various pieces of information. Determining the information may include one or more of, for example, estimating the information, calculating the information, predicting the information, or retrieving the information from memory.

Further, this application may refer to "accessing" various pieces of information. Accessing the information may include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of, for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. For example, in certain embodiments the encoder signals a quantization matrix for de-quantization. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways.

For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

## Claims

1.    A method performed by a decoder for decoding a video block, the method comprising:

   receiving, from an encoder, a signal indicative of an index of a candidate selected from a plurality of candidates based on at least one criterion;
   storing a best-by-criterion candidate in at least one history-based list of a plurality of history-based lists if the selected candidate is different from the best-by-criterion candidate; and
   decoding the video block using the selected candidate.

2.    The method of claim 1, wherein the signal is further indicative of a decoding mode used for decoding the video block.

3.    The method of claim 2, further comprising selecting the at least one history-based list from the plurality of history-based lists based on the decoding mode.

4.    The method of claim 3, wherein each history-based list of the plurality of history-based lists corresponds to at least one distinct prediction mode.

5.    The method of claim 4, wherein the at least one distinct prediction mode comprises:

   an intra template matching prediction mode,
   an intra block copy mode,
   an inter prediction mode,
   a cross-component prediction (CCP) mode, or
   an extrapolation filter-based intra prediction (EIP) mode.

6.    The method of claim 5, wherein the plurality of candidates comprise one or more of:

   a plurality of block vectors,

a plurality of motion vectors,
a plurality of CCP models, or
a plurality of EIP mode parameters.

7. A decoder for decoding a video block, the decoder comprising:

a memory configured to store a plurality of history-based lists; and
a processor configured to:

receive, from an encoder, a signal indicative of an index of a candidate selected from a plurality of candidates based on at least one criterion,
store a best-by-criterion candidate in at least one history-based list of the plurality of history-based lists if the selected candidate is different from the best-by-criterion candidate, and
decode the video block using the selected candidate.

8. The decoder of claim 7, wherein the processor is further configured to store the selected candidate in the at least one history-based list if the selected candidate is different from the best-by-criterion candidate.

9. The decoder of claim 7, wherein the processor is further configured to determine a combination of the best-by-criterion candidate and the selected candidate if the selected candidate is different from the best-by-criterion candidate.

10. The decoder of claim 9, wherein the processor is further configured to store the combination of the best-by-criterion candidate and the selected candidate in the at least one history-based list.

11. The decoder of claim 7, wherein the processor is further configured to determine a cost for each candidate of the plurality of candidates.

12. The decoder of claim 11, wherein the best-by-criterion candidate is associated with a least cost.

13. A circuit configured to perform any of the methods of claims 1 through 6.

14. A video codec device comprising one or more processors configured to perform any of the methods of claims 1 through 6.

15. A non-transitory computer-readable medium comprising instructions that, when executed by one or more processors of a computing device, cause the one or more processors to perform any of the methods of claims 1 through 6.

FIG. 1

EP 4 676 056 A1

FIG. 2

EP 4 676 056 A1

FIG. 3

300

305 — RF / COMP / USB / HDMI

310 — Processor
320 — Memory
330 — Encoder/Decoder
340 — Storage Device
350 — Communication Interface
360 — Display Interface
365 — Display
370 — Audio Interface
375 — Audio
380 — Peripheral Interface
385 — Peripherals
390 — Communication Channel

FIG. 4

FIG. 5

Sparse Search Example 510

Refinement Search Example 520

FIG. 6

602 ITMP PROCESS STANDARD+MERGE Candidates Integer-pel TM only 30 Candidates in Refinement

604 TM COST RANKING 30 INTEGER Candidates are Selected

606 REFINEMENT PROCESS

608 TM COST RANKING 19 INTEGER Candidates are Selected

FIG. 7

FIG. 8

FIG. 9

```
                        ┌─────────────────────────┐
                        │    Decode ITMP Syntax    │──── 1002
                        └─────────────────────────┘
                                    │
                                    ▼
                              ╱─────────────╲
              No           ╱   itmp_idx>0 ?   ╲           Yes
       ┌─────────────────◄    ╲               ╱    ►─────────────────┐
       │                       ╲─────────────╱                       │
       │                              │                              │
       │                            1004                             │
       ▼                                                             ▼
┌──────────────────────┐                              ┌──────────────────────┐
│  Obtain BV_itmp_idx   │──── 1006          1008 ────│     Obtain BV_0 and   │
│   (Equal to BV_0)     │                              │      BV_itmp_idx      │
└──────────────────────┘                              └──────────────────────┘
       │                                                             │
       └──────────────────────────┬──────────────────────────────────┘
                                   │
                                   ▼
                        ┌─────────────────────────┐
                        │ Update History-based List │
                        └─────────────────────────┘
                                   │
                                 1010
```

FIG. 10

Updating History-based List in Case when itmp_idx is 0

Updating History-based List in Case when itmp_idx is Larger than 0

ITMP BV Candidate List

| BV_0 |
| BV_1 |
| BV_2 |
| BV_3 |
| ... |
| BV_n |

1110

— 1102

History-based List

| BV_0 |
| BV_1 |
| BV_2 |
| BV_3 |
| ... |
| BV_n |
| BV_0 |

1120

ITMP BV Candidate List

| BV_0 |
| BV_1 |
| ... |
| BV_itmp_idx |
| ... |
| BV_n |

1110

1104

— 1102

History-based List

| BV_0 |
| BV_1 |
| BV_2 |
| BV_3 |
| ... |
| BV_n |
| BV_0 |
| BV_Itmp_idx |

1120

FIG. 11A

FIG. 11B

1200

```
                    ┌─────────┐
                    │  Start  │
                    └─────────┘
                         │
                         ▼
        ┌───────────────────────────────┐
        │   Determine a plurality of     │
        │   candidates corresponding     │──── 1210
        │   to an encoding/decoding mode │
        └───────────────────────────────┘
                         │
                         ▼
        ┌───────────────────────────────┐
        │   Sort the plurality of        │
        │   candidates based on at       │──── 1220
        │   least one criterion          │
        └───────────────────────────────┘
                         │
                         ▼
        ┌───────────────────────────────┐
        │   Select a candidate for       │
        │   encoding/decoding a video    │──── 1230
        │   block                        │
        └───────────────────────────────┘
                         │
                         ▼
        ┌───────────────────────────────┐
        │   Determine a                  │
        │   best-by-criterion candidate  │──── 1240
        └───────────────────────────────┘
                         │
                         ▼
        ┌───────────────────────────────┐
        │   Select a history-based list  │
        │   from a plurality of          │──── 1250
        │   history-based lists          │
        └───────────────────────────────┘
                         │
                         ▼    1260
```

Are the selected candidate and the best-by-criterion candidate same?

No

Yes

1280

Store the best-by-criterion candidate and the selected candidate in the history-based list

Store one of the two candidates in the history-based list — 1270

End

FIG. 12

## EUROPEAN SEARCH REPORT

**Application Number**

EP 24 30 6072

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/112715 A1 (HUNG CHAO-HSIUNG [US] ET AL) 9 April 2020 (2020-04-09) * paragraphs [0122] - [0124], [0139] - [0144], [0153] - [0159], [0169] - [0171] * ----- | 1-15 | INV. H04N19/52 |
| A | US 2021/385484 A1 (XU XIAOZHONG [US] ET AL) 9 December 2021 (2021-12-09) * paragraphs [0114], [0135] - [0141] * ----- | 1-15 | |
| A | COBAN M ET AL: "Algorithm description of Enhanced Compression Model 12 (ECM 12)", 33. JVET MEETING; 20240117 - 20240126; TELECONFERENCE; (THE JOINT VIDEO EXPLORATION TEAM OF ISO/IEC JTC1/SC29/WG11 AND ITU-T SG.16 ), , no. JVET-AG2025 ; m66954 29 March 2024 (2024-03-29), XP030316747, Retrieved from the Internet: URL:https://jvet-experts.org/doc_end_user/documents/33_Teleconference/wg11/JVET-AG2025-v1.zip JVET-AG2025-v1.docx [retrieved on 2024-03-29] * sections 3.1.1, 3.1.15, 3.2.5, 3.2.17 * ----- | 1-15 | |
| A | WO 2020/248925 A1 (BEIJING BYTEDANCE NETWORK TECH CO LTD [CN]; BYTEDANCE INC [US]) 17 December 2020 (2020-12-17) * paragraphs [0260], [0261], [0268] - [0271] * ----- | 1-15 | TECHNICAL FIELDS SEARCHED (IPC) H04N |
| A | US 2024/171771 A1 (ZHAO JANE [KR] ET AL) 23 May 2024 (2024-05-23) * paragraphs [0287] - [0293], [0333], [0334] * ----- | 1-15 | |

The present search report has been drawn up for all claims

| Place of search | Date of completion of the search | Examiner |
|---|---|---|
| Munich | 20 November 2024 | Montoneri, Fabio |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

........................................................................

& : member of the same patent family, corresponding
document

EPO FORM 1503 03.82 (P4C01)

## ANNEX TO THE EUROPEAN SEARCH REPORT
## ON EUROPEAN PATENT APPLICATION NO.

EP 24 30 6072

This annex lists the patent family members relating to the patent documents cited in the above-mentioned European search report.
The members are as contained in the European Patent Office EDP file on
The European Patent Office is in no way liable for these particulars which are merely given for the purpose of information.

20-11-2024

| Patent document cited in search report | Publication date | Patent family member(s) | Publication date |
|---|---|---|---|
| US 2020112715 A1 | 09-04-2020 | CN 112806012 A | 14-05-2021 |
| | | EP 3861745 A1 | 11-08-2021 |
| | | US 2020112715 A1 | 09-04-2020 |
| | | WO 2020072743 A1 | 09-04-2020 |
| US 2021385484 A1 | 09-12-2021 | AU 2020302866 A1 | 07-10-2021 |
| | | CA 3133478 A1 | 30-12-2020 |
| | | CN 113615172 A | 05-11-2021 |
| | | EP 3991405 A1 | 04-05-2022 |
| | | JP 7183442 B2 | 05-12-2022 |
| | | JP 2022521167 A | 06-04-2022 |
| | | KR 20210080525 A | 30-06-2021 |
| | | SG 11202110194W A | 28-10-2021 |
| | | US 2020413084 A1 | 31-12-2020 |
| | | US 2021385484 A1 | 09-12-2021 |
| | | WO 2020264157 A1 | 30-12-2020 |
| WO 2020248925 A1 | 17-12-2020 | CN 113994682 A | 28-01-2022 |
| | | US 2022086484 A1 | 17-03-2022 |
| | | US 2024373061 A1 | 07-11-2024 |
| | | WO 2020248925 A1 | 17-12-2020 |
| US 2024171771 A1 | 23-05-2024 | BR 112020014544 A2 | 03-08-2021 |
| | | CA 3088504 A1 | 18-06-2020 |
| | | CA 3190343 A1 | 18-06-2020 |
| | | CN 111771376 A | 13-10-2020 |
| | | CN 116668685 A | 29-08-2023 |
| | | CN 116668686 A | 29-08-2023 |
| | | CN 116684589 A | 01-09-2023 |
| | | EP 3716626 A1 | 30-09-2020 |
| | | JP 7073501 B2 | 23-05-2022 |
| | | JP 7303346 B2 | 04-07-2023 |
| | | JP 7488945 B2 | 22-05-2024 |
| | | JP 2021510265 A | 15-04-2021 |
| | | JP 2022087172 A | 09-06-2022 |
| | | JP 2023112113 A | 10-08-2023 |
| | | KR 20200098703 A | 20-08-2020 |
| | | KR 20220156983 A | 28-11-2022 |
| | | KR 20230175329 A | 29-12-2023 |
| | | US 2020359049 A1 | 12-11-2020 |
| | | US 2023029880 A1 | 02-02-2023 |
| | | US 2023239497 A1 | 27-07-2023 |
| | | US 2024171771 A1 | 23-05-2024 |
| | | WO 2020122640 A1 | 18-06-2020 |

EPO FORM P0459

For more details about this annex : see Official Journal of the European Patent Office, No. 12/82